(19) Europäisches Patentamt European Patent Office Office européen des brevets

(11) **EP 1 992 909 B1**

(12) **EUROPEAN PATENT SPECIFICATION**

(45) Date of publication and mention of the grant of the patent:
**27.09.2017 Bulletin 2017/39**

(51) Int Cl.:
**G01B 21/20** *(2006.01)*      **G01B 11/24** *(2006.01)*

(21) Application number: **06728630.2**

(22) Date of filing: **28.02.2006**

(86) International application number:
**PCT/JP2006/304200**

(87) International publication number:
**WO 2007/099646 (07.09.2007 Gazette 2007/36)**

(54) **CIRCULAR SHAPE MEASUREMENT METHOD, CYLINDRICAL SHAPE MEASUREMENT METHOD, AND CYLINDRICAL SHAPE MEASUREMENT APPARATUS**

MESSVERFAHREN FÜR KREISFÖRMIGE FORM, MESSVERFAHREN FÜR ZYLINDRISCHE FORM UND MESSVORRICHTUNG FÜR ZYLINDRISCHE FORM

PROCEDE DE MESURE DE FORME CIRCULAIRE, PROCEDE DE MESURE DE FORME CYLINDRIQUE ET APPAREIL DE MESURE DE FORME CYLINDRIQUE

(84) Designated Contracting States:
**DE FR GB IT**

(43) Date of publication of application:
**19.11.2008 Bulletin 2008/47**

(73) Proprietor: **CANON KABUSHIKI KAISHA**
**Ohta-ku**
**Tokyo 146-8501 (JP)**

(72) Inventors:
- **KAWAI, Yasuhiro**
  **Tokyo 146-8501 (JP)**
- **TERAMOTO, Kyoichi**
  **Tokyo 146-8501 (JP)**
- **KAWAMORITA, Yoichi**
  **Tokyo 146-8501 (JP)**

(74) Representative: **TBK**
**Bavariaring 4-6**
**80336 München (DE)**

(56) References cited:
WO-A1-2006/025603      FR-A1- 2 579 745
JP-A- 4 148 819      JP-A- 6 147 879
JP-A- 04 148 819      JP-A- 60 073 413
JP-A- 2000 249 540      US-A1- 2004 226 336

- **MOORE D ET AL: "Design considerations in multiprobe roundness measurement", JOURNAL OF PHYSICS E. SCIENTIFIC INSTRUMENTS, IOP PUBLISHING, BRISTOL, GB, vol. 22, no. 6, 1 June 1989 (1989-06-01), pages 339-343, XP020018997, ISSN: 0022-3735, DOI: 10.1088/0022-3735/22/6/001**

**Description**

TECHNICAL FIELD

The present invention relates to a measuring method of a shape of a cross-sectional circle in a direction orthogonal to an axis of a cylinder, and a shape of a cylinder, and a measuring apparatus used for this. In particular, the present invention relates to the technology of contributing to precision measurement at the time of cutting an outer surface of a cylindrical member, as means of obtaining an accurate cylindrical member. The scopes of the measuring technique acquired by the present invention are various. In particular, the present inventor and et al. applied the present invention to an image forming member of an electrophotographic system of copier, laser beam printer, facsimile, or printer, or the measurement of its base substrate, and verified its effects.

BACKGROUND ART

Heretofore, a cylindrical member whose shape is finished with predetermined accuracy has been used for an electrophotographic photosensitive drum or a development sleeve in an image forming apparatus such as an electrophotographic system of copier, laser beam printer, facsimile, or printing machine. An electrophotographic photosensitive drum is produced by giving a photosensitive film to a surface of a drum substrate which is finished with predetermined accuracy. Nevertheless, there is a problem that convexo-concave arises in a photosensitive film when the accuracy of dimensions of the drum substrate is low, and for this reason, a defect arises in an image of an image forming apparatus. Hence, in order to obtain high-precision image forming apparatus, high accuracy is required in a cylindricity, a roundness, and the like of the drum substrate.

Furthermore, also in the process of producing such a drum substrate, a highly precise measurement function aiming at assuring the accuracy of dimensions is required, and the following conventional technology is known as methods aiming at it. A method of measuring a surface shape by a zonal laser or other measuring means while standing and rotating a measured cylinder (a cylinder which is a measuring object, and this is the same hereafter) on a rotatable base (for example, refer to Japanese Patent Application Laid-Open No. H06-201375). A method of holding both ends of a measured cylinder with a certain holder and rotating the cylinder, and measuring the size of interrupting a zonal laser to measure cylindrical shape (for example, refer to Japanese Patent Application Laid-Open No. H08-005341). A method of performing measurement by the approximate calculation of the measured values acquired from displacement detectors facing an outer peripheral section of a measured cylinder by rotating the measured cylinder without fixing a rotation axis (for example, refer to Japanese Patent Application Laid-Open No. H06-147879) and the like. Nevertheless, in addition to such a request to extended-definition of an image forming apparatus, a simpler measuring system aiming at the reduction of manufacturing cost becomes indispensable in recent years. Furthermore, with mentioning a cylindrical measuring method with following needs as industrial product evaluation, items to be evaluated should be classified into the accuracy of dimensions as a cylinder, and partial geometrical defects of a surface, and measuring means suitable for each object should be used. Here, according to the measurement of accuracy of dimensions, in a field of measuring the accuracy of dimensions of a circumferential shape of a cylinder, especially a circumferential shape of a cylinder which premises that it has such a high level of accuracy that the present invention may make it an object, it is possible to make it sufficient evaluation even if the number of measured points is a small number comparatively when each measured value is very exact. Hence, industrially, it is preferable to reduce the number of measurement points as much as possible, and to aim at reducing processing time. On the other hand, even if the number of measurement points is increased at the time of evaluating a partial geometrical defect of a cylindrical surface, it is difficult to evaluate all microdefects such as a hairline-like scratch defect. Hence, it is not preferable also in this point to make the number of measurement points increase. Hence, evaluation means by surface defect analysis such as image processing which replaces it should be used. That is, when performing the dimensional accuracy measurement of a circumferential shape of a cylinder as industrial product evaluation, from a viewpoint of pursuing measurement efficiency, it can be said that it is most preferable that there are few loads concerning measurement, each measured value is exact, and the number of measurement points is suppressed to the minimum. In this point, although the conventional method of measuring a surface shape by measuring means such as a zonal laser while standing a measured cylinder on a rotatable base and rotating this (for example, refer to Japanese Patent Application Laid-Open No. H06-201375) can acquire very highly precise measured value, it is not easy to reduce measuring time and loads since preparatory work such as precise centering of the measured cylinder on the base in measurement is required. In addition, the method of holding both ends of a measured cylinder with a certain holder and rotating the cylinder, and measuring the size of interrupting a zonal laser to measure cylindrical shape (for example, refer to Japanese Patent Application Laid-Open No. H08-005341) can perform comparatively simple measurement. On the other hand, the variation of a cylindrical wall thickness affects a measured value, the fitting gap size of the holder of both ends, deformation of ends by a holding force, the vibration of a shaft arising at the time of rotating the measured cylinder, or the like becomes easily a cause of generating a measurement error. Furthermore, the method of performing measurement by the approximate calculation of the measured values acquired from displacement detectors facing an outer peripheral section of a measured cylinder by rotating the measured cylinder without fixing a rotation axis (for example, refer to Japanese Patent Application Laid-Open No. H06-147879) is simple and can suppress an influence of accuracy of an instrument concerning measurement over measurement result. On the other hand, this has a feature that, since the measurement result is approximately calculated values, it increases the accuracy of each measured value to make the number of measurement points and an order of an approximate calculation increase. It is required that the number of measurement points is at least 64 points or 100 points or more. Hence, it is hardly possible by this method to reduce the number of measurement points, and this method takes comparatively long measuring time.

Thus, the conventional technology has not provided a dimensional accuracy measuring method of a circumferential shape of a cylinder as industrial product evaluation which makes loads, concerning measurement, minimum from a viewpoint of measurement efficiency, and makes it possible for each measured value to be exact and to suppress the number of measurement points to the minimum.

US 2004/226336 A1 discloses a method and an apparatus for measuring a centerline-runout as well as an out-of-roundness of a shaft. The centerline-runout and the out-of-roundness of a shaft is measured by measuring the distance between the central longitudinal axis of the shaft and each of a plurality of angularly spaced measurement points located on the outer surface of the shaft in a measurement plane using a measurement device.

JP 60 073413 A discloses a measuring method of roundness. The surface ruggedness of the body 1 to be measured is measured by three detectors A, B, and C and their measurement data are processed to compensate a measurement error due to the rotary motion, thereby finding the roundness shape. The roundness error of the measured body 1 is obtained from the distance from such an imaginary circle that the mean value of the square of an error at each measurement point is minimum.

DISCLOSURE OF THE INVENTION

In view of such problems, the present invention was conducted to aim at making loads of measurement few, making each measured value exact, and efficiently reducing the number of measurement points, in cylindrical dimension measurement, and in particular, the measurement of a circumferential shape.

That is, according to an aspect of the present invention, there is provided a measuring method of a shape of a cross-sectional circle which is orthogonal to an axis of a cylinder, characterized by comprising a step of calculating distances between a reference point and a circumference on the basis of the change of the distances of at least three predetermined points on the circumference of the cross-sectional circle to the reference point, which is set in the cross-sectional circle and is an intersection point of a rotation axis of a measured cylinder and the cross-sectional circle, by rotation of the cylinder, and specifying the shape of the cross-sectional circle.

Specifically, there is provided a measuring method as set out in independent claim 1.

Furthermore, according to the present invention, there is provided a measuring method as set out in independent claim 2.

Most of conventional measuring methods require loads so as to pursue the accuracy of mechanical limitation of a cylinder centers as a measurement reference position for the purpose of acquiring the higher accuracy of measurement. On the other hand, a method which the present invention provides premises that this cylinder center is such a virtual center that moves by rotation, i.e., a floating center. Therefore, the measuring method of the present invention is characterized by tracking, theoretically catching, and limiting a position of this floating center each time the measured cylinder rotates by one notch on the basis of the change of numerical values acquired from gauge heads one by one according to the measurement without mechanically limiting the measurement reference position. Hence, since there is no need of limiting the above mentioned cylinder center, that is, the measurement reference position exactly according to the measuring method of the present invention, it is possible to measure a circumferential shape of a cylinder with high accuracy simply without accompanying such any loads.

In addition, in the method which the present invention provides, since each measured value can obtain measurement result which is directly measured without being approximately calculated, each measured value is not influenced by the number of measurement points. Because of this, the number of measurement points at the time of measuring a circumferential shape (dimensional accuracy) of the above-mentioned cylinder which is premised on having high accuracy originally like an object of the present invention is ten points or about 20 points, that is, it is possible to perform measurement required for accuracy assurance of a product at the necessary minimum number of measurement points. Hence, in performing the accuracy measurement of a cylinder as industrial product evaluation, it can be said that the present invention is very ideal from a viewpoint of pursuing measurement efficiency.

In addition, according to another aspect of the present invention, what is provided as a method of measuring a cylindrical shape of a cylinder using this method is a measuring method of a cylindrical shape of a cylinder characterized by having: a step of moving a plurality of detectors, which measure the cylinder size of the cylinder from a direction orthogonal to a cylinder central axis of the cylinder, in parallel to the cylinder central axis; and a step of calculating a plurality of detection signals in predetermined positions obtained from a plurality of above-mentioned detectors, in making the cylinder a measured object, and making the cylinder rotate in its circumferential direction to measure a cylindrical shape of the cylinder, and in that the cylindricity of the measured cylinder is measured by obtaining a circumferential shape and a roundness of a cross-sectional circle orthogonal to the above-mentioned cylinder central axis using the above-mentioned measuring method of a circumferential shape in rotating and measuring a measured cylinder in the method of measuring the cylindricity and roundness of the cylinder.

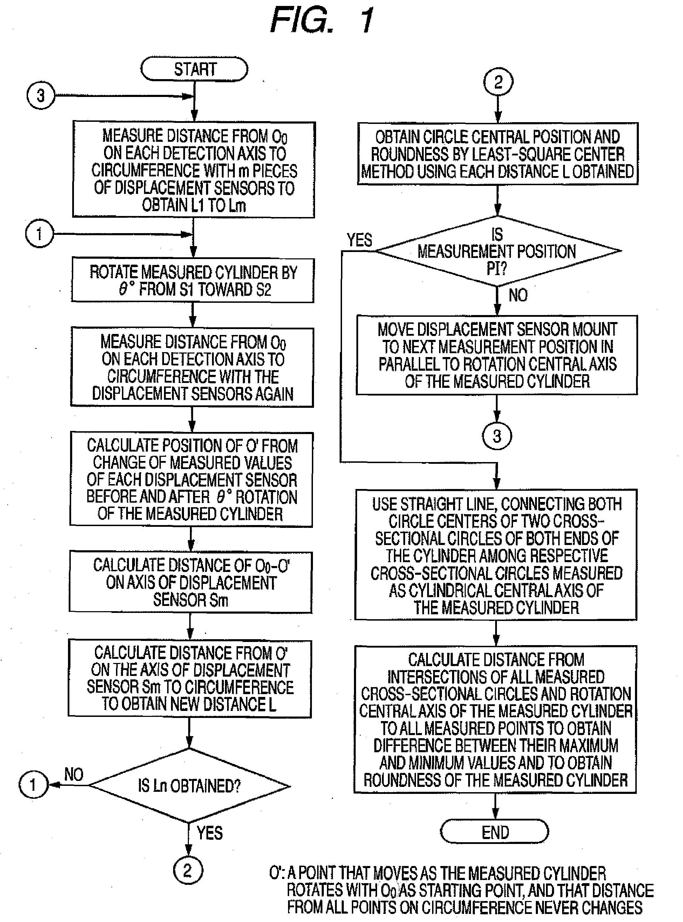

In addition, according to further aspect of the present invention, what is provided is a method of measuring a cylindrical shape according to a flowchart shown in FIG. 1 using measuring means of having a cylinder support jig on which the measured cylinder is placed and which rotates this, and three or more sensors for detecting displacements which are located on the same cross-section, which is orthogonal to a rotation axis of the measured cylinder, on a mount provided rotatably in parallel to the rotation axis of the measured cylinder, which are oriented to the measurement reference point ($O_0$) which is an intersection of the rotation axis of the measured cylinder, and the cross-section orthogonal to the rotation axis, and which are arranged in a shape formed by connecting the measurement point ($O_0$) and said three or more sensors being a fan shape every predetermined angle ($\theta°$) with $O_0$ as a center and are fixed to the mount.

Specifically, there is provided a measuring method as set out in independent claim 3.

According to another aspect of the present invention, there is provided a measuring method as set out in independent claim 4.

According to still another aspect of the present invention, there is provided a measuring method as set out in dependent claim 5.

In addition, a further aspect of the present invention, there is provided a measuring method as set out in independent claim 6.

Furthermore, still further aspect of the present invention, there is provided a measuring apparatus as set out in independent claim 7.

Furthermore, another aspect of the present invention, there is provided a measuring apparatus as set out in independent claim 8.

The n mentioned in some of the claims is a number required in order to calculate a circumferential shape of a cross-sectional circle, for example, when calculating the circumferential shape of a cross-sectional circle by obtaining the above-mentioned distances at intervals of $\theta°$ equally, $n = 360°/\theta°$ holds.

The above-described "to calculate a circumferential shape of a cross-sectional circle" means, for example, to obtain a circle center position of a cross-sectional circle by a method of least squares, or to obtain a roundness.

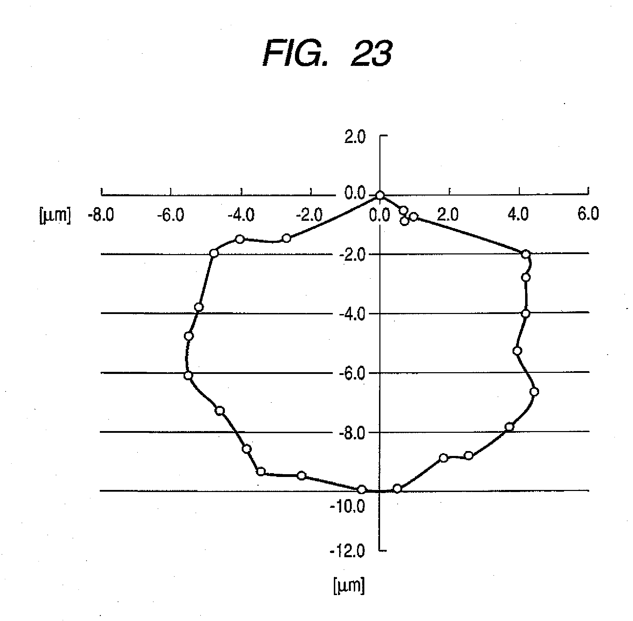

Most of conventional measuring methods require loads so as to pursue accuracy of mechanical limitation of a cylinder center as a measurement reference position for the purpose of acquiring the higher accuracy of measurement. On the other hand, methods which the present invention provides premise that this cylinder center is a virtual center, i.e., a center which may move by rotation. That is, as shown in FIG. 23, when a cylinder is rotated by a predetermined angle ($\theta°$) with a starting point of a floating center as a reference point, the floating center moves from the starting point. When it is rotated further again, the floating center moves further. When it is rotated sequentially for the cylinder to be rotated finally at 360°, the floating center takes a track of the floating center which is shown in the figure. Therefore, the measuring method of the present invention can specify a shape of a circle, which is a measuring object, by tracking, and theoretically catching a position of this floating center, and calculating distances between the floating center and points on the circumference of the circle each time the measured cylinder rotates by one notch on the basis of the change of numerical values acquired from gauge heads one by one according to the measurement without mechanically limiting the measurement reference position. Hence, according to the methods of the present invention, since there is no need of limiting exactly the above-mentioned cylinder center, that is, a measurement reference position, it is possible to measure a cylinder with high accuracy simply without accompanying such any loads. In addition, in the methods which the present invention provides, a rotation method in the measurement of a measured cylinder is not limited. Hence, it is possible to perform measurement in a state of making both end sections free, or in a state of mounting parts such as a flange. Hence, even if a measuring mechanism using a measuring method of the present invention is mounted in a production line, it is possible to perform highly precise measurement very simply without problems such as an interference with conveyance means.

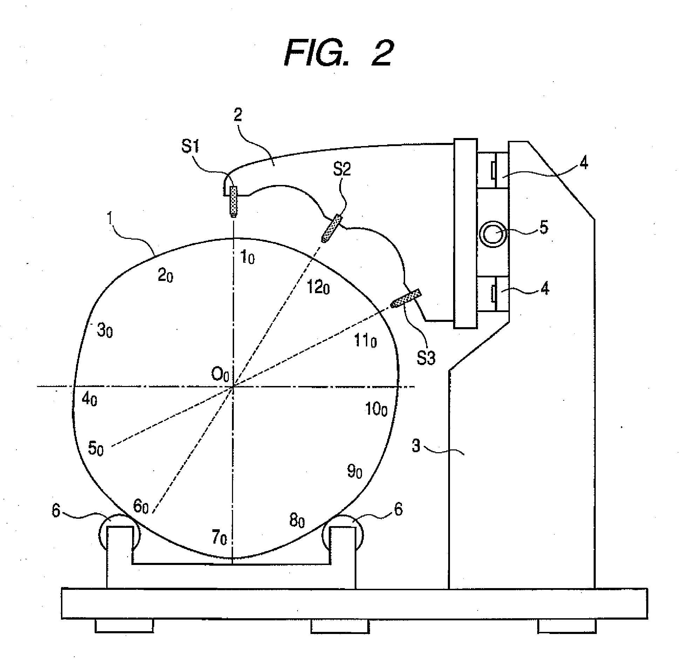

In addition, the "rotation axis", "cylinder axis", and "point" where they intersects, which are used in this specification do not point out, for example, a straight line without thickness and a point without an area which are used mathematically. But, as shown in FIG. 2, since a measured cylinder rotates on the basis of its own outer periphery, unless the measured cylinder is at least a perfect cylinder or an outer periphery abutting on runners 6 is a perfect circular shape, the rotation axis and the point have certain ranges.

Hereafter, numerical values which show the ranges will be explained. When a circle whose radius is made $\Delta L$ is shown as a range with a least-square circle center of a measured cross-sectional circle as a center, the range of the rotation axis preferably fulfills the following formula and $\Delta L' < d2 \cdot 10^{-3}$. Further, more preferably, it fulfills the following

formula and $\Delta L' < d2 \cdot 10^{-4}$, or most preferably, fulfills the following formula and $\Delta L' < d2 \cdot 10^{-5}$.

$$d2 \quad \Delta L' = \sqrt{d2^2 \quad (\Delta L \quad T)^2}$$

d2: Mean radius value of cross-sectional circle measured
T: Cylindricity of measured cylinder

For example, assuming that d2 = 50.00 mm and T = 0.05 mm, a range of the rotation axis in a most preferable case is $\Delta L' < 0.0005$ mm and $\Delta L < 0.274$ mm, and a range of the rotation axis by calculation is 0.548 mm.
In addition, as reality of $\Delta L$, positioning of a sensor in such accuracy is a possible range without any problem in view of a level of present machining technology (a general limit in this industry is about $\Delta L \approx 0.002$ mm in the case of d2 = 50 mm).

BRIEF DESCRIPTION OF THE DRAWINGS

FIG. 1 is a measurement flowchart.
FIG. 2 is a schematic diagram of a measuring apparatus.
FIG. 3 is an explanatory diagram of measuring points.
FIG. 4 is an explanatory diagram relating to the movement of a floating center.
FIG. 5 is an explanatory diagram (1) relating to the calculation of a floating centre position.
FIG. 6 is an explanatory diagram (2) relating to the calculation of a floating centre position.
FIG. 7 is a diagram showing positions of the sensors for detecting displacements in a first embodiment.
FIG. 8 is a schematic diagram showing positions of sensors for detecting displacements in a second embodiment.
FIG. 9 shows data from measured values of sensors for detecting displacements to coordinate positions of circle centers in samples 1 to 5 which are obtained in the first embodiment.
FIG. 10 shows data from measured values of sensors for detecting displacements to coordinate positions of circle centers in samples 6 to 10 which are obtained in the first embodiment.
FIG. 11 shows rectangular coordinate positions of respective points on the basis of center coordinate positions, distances to respective points, and their maximum values and minimum values in samples 1 to 5 obtained in the first embodiment.
FIG. 12 shows rectangular coordinate positions of respective points on the basis of center coordinate positions, distances to respective points, and their maximum values and minimum values in samples 6 to 10 obtained in the first embodiment.
FIG. 13 shows roundness obtained in the first embodiment and a first comparative example.
FIG. 14 is a graph of comparing roundness obtained in the first embodiment and first comparative example.
FIG. 15 shows measurement durations and difference which were obtained in the first embodiment and first comparative example.
FIG. 16 shows distances from sensors for detecting displacements to the surface of the measured cylinder which were obtained in a second embodiment.
FIG. 17 shows differential values which were generated by the rotation in FIG. 7 and were obtained in the second embodiment, and numerical values which were obtained by subtracting the differential values from a constant to be made positive integers.
FIG. 18 shows displacement amounts of the surface of a measured cylinder 1 on the basis of a floating center which were obtained in the second embodiment.
FIG. 19 shows the coordinate value and distances which were obtained in the second embodiment and were obtained by converting FIG. 9 into the rectangular coordinate position.
FIG. 20 shows distances of the above-mentioned respective intersections and respective measuring points on a circumference at each coordinate position, a maximum value, and a minimum value, which were obtained in a third embodiment.
FIG. 21 shows cylindricities of the measured cylinders which were obtained in a fourth embodiment.
FIG. 22 shows cylindricities of the measured cylinders which were obtained in a fifth embodiment.
FIG. 23 is a graph showing a locus of movement of an actual floating center on the basis of a starting point of the floating center by 360° rotation of a cylinder at the time of the measured cylinder being rotated by a predetermined angle.

## BEST MODES FOR CARRYING OUT THE INVENTION

The following description is one embodiment of a method used in the present invention, and those skilled in the art should be able to easily understand that the same effect will be obtained also in other forms.

FIG. 2 shows an example of an apparatus used for the shape measurement of a cross-sectional circle of a cylinder which relates to this embodiment. The measuring apparatus concerned receives a measured cylinder 1 on rotatable cylinder support jigs (runners 6), and has three sensors S1, S2 and S3 for detecting displacements which are located on the same cross-section, which is orthogonal to a rotation axis of the measured cylinder 1, on a mount 2 mounted reciprocably in parallel to the rotation axis of the measured cylinder 1 by guide rails 4 and a ball screw 5, which are oriented to a measurement reference point $O_0$ which is an intersection of the rotation axis of the measured cylinder 1, and the cross-section orthogonal to the rotation axis, and which are arranged in a shape formed by connecting a measurement reference point ($O_0$) and three sensors being a fan shape with forming a predetermined angle ($\theta°$) with the measurement reference point $O_0$ as a center and are fixed to the mount 2. The three sensors S1, S2 and S3 for detecting displacements, and rotation centers of two runners 6 are being fixed to the same machine, and their mutual positions always do not change.

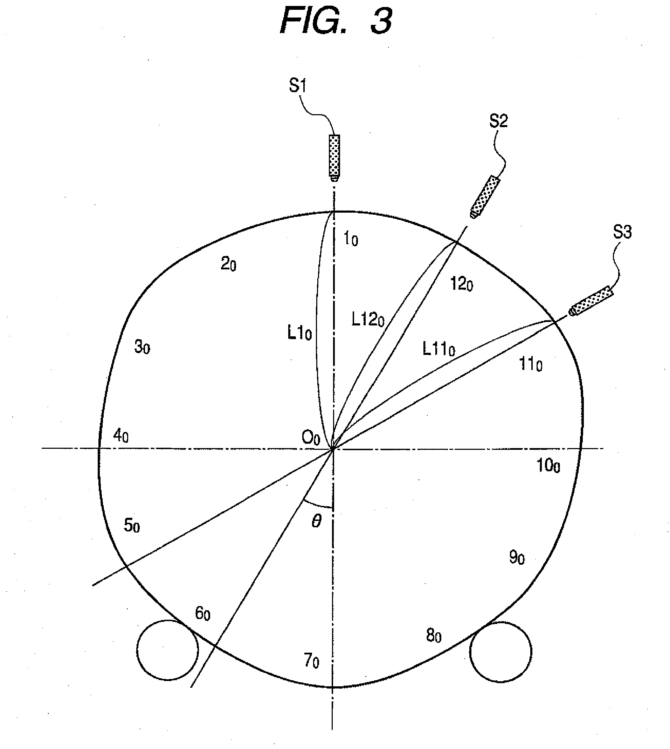

Next, a measuring method of a shape of a cross-sectional circle of the cylinder concerned which is orthogonal to an axis will be described. Here, a rotation angle $\theta°$ per one measurement of the measured cylinder 1 was set at 30°. Hence, measuring points on a circumference become 12 points $1_0$ to $12_0$ as shown in FIG. 3. Then, this measuring method finally calculates distance from a starting point ($O_{n=0}$) of a floating center to respective points $1_0$ to $12_0$ on the circumference of a measured circle to specify the shape of the measured circle.

As a first stage, distances $L1_0$, $L12_0$ and $L11_0$ between $O_0$ ($O_{n=0}$) and the points $1_0$, $12_0$, and $11_0$ on a circumference of the measured circle are measured by using the sensors S1, S2 and S3 for detecting displacements.

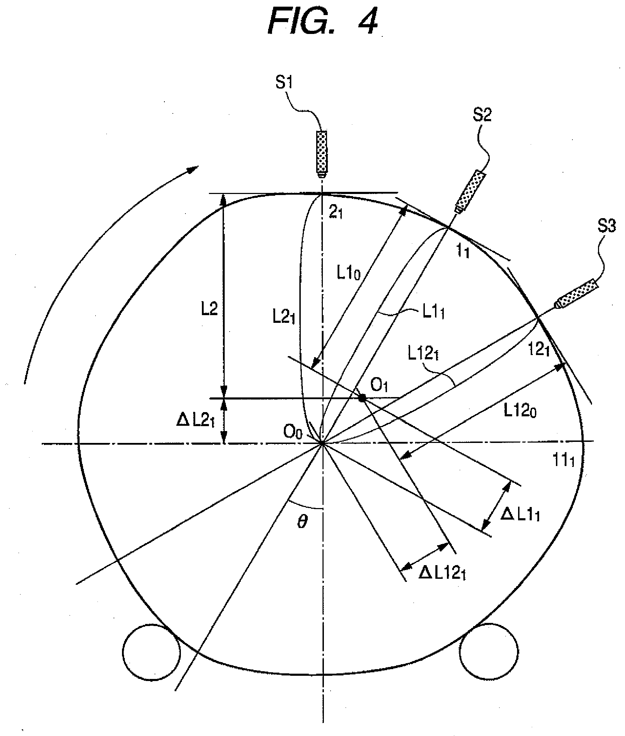

As a second stage, when the cylinder is rotated rightward by 30°, the measuring points $1_0$, $12_0$, and $11_0$ on the circumference in the first stage move to $1_1$, $12_1$, and $11_1$ respectively, and the sensors S1, S2 and S3 for detecting displacements become ready to measure distances between points $2_1$, $1_1$ and $12_1$ on the circumference and the measurement reference point $O_0$ respectively, as shown in FIG. 4. At this time, assuming that the floating center $O_{n=0}$ does not coincide with a true center of the measured circle, and that the measured circle is not truly round, $O_n$ moves to $O_{n=1}$. At this time, the distance between the floating center $O_{n=o}$ and the point $2_1$ on the circumference is unknown. Next, the distances $L2_1$, $L1_1$ and $L12_1$ between the points $2_1$, $1_1$ and $12_1$ on the circumference and the measurement reference point $O_0$ are respectively measured using the sensors S1, S2 and S3 for detecting displacements.

Here, a position of a current position $O_{n=1}$ of the floating center $O_n$ is obtained from the change of respective distances by rotation. Since $L1_0$ and $L12_0$ are known, it is possible to obtain moving distances $\Delta L1_1$ and $\Delta L12_1$ from $O_{n=o}$ to $O_{n=1}$ on each detection axis of the sensors S2 and S3 for detecting displacements.

$$\Delta L1_1 = L1_1 - L1_0 \tag{1}$$

$$\Delta L12_1 = L12_1 - L12_0 \tag{2}$$

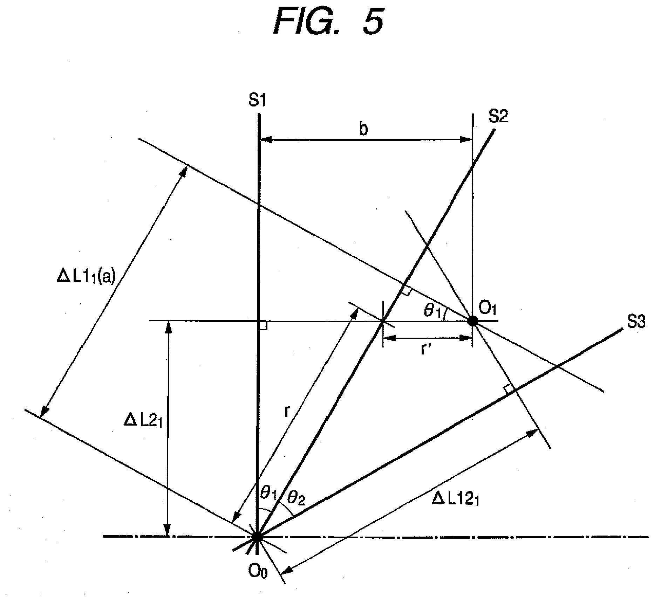

Hereinafter, a moving distance $\Delta L2_1$ of the floating center $O_{n=1}$ on the detection axis of the sensor S1 for detecting a displacement is obtained using these two distances. Then, a distance between the floating center $O_{n=0}$ and the point $2_0$ on the circumference can be obtained by taking the difference between $L2_1$ and $\Delta L2_1$. Thus, as shown in FIG. 5, let $\Delta L1_1$ be a, and let the shortest distance between the detection axis of the sensor S1 for detecting a displacement and the floating center $O_{n=1}$, that is, a moving distance in an x-axial component of the floating center $O_{n=1}$ expressed in rectangular coordinates where the detection axis of the sensor S1 for detecting a displacement is made a y-axis be b. When expressing a and b using *r* and r' shown in FIG. 5, respectively:

$$r' \cdot \sin\theta_1 + r = a \tag{3}$$

$$r' + r \cdot \sin\theta_1 = b \tag{4}$$

$$r' = (b - a \cdot \sin\theta_1)/(\cos^2\theta_1) \tag{5}$$

$$r = a - \sin\theta_1 \cdot [(b - a \cdot \sin\theta_1)/(\cos^2\theta_1)] \qquad (6)$$

Furthermore, from FIG. 5, since being $\Delta L2_1 = r \cdot \cos\theta_1$,

$$\Delta L2_1 = a \cdot \cos\theta_1 - \tan\theta_1(b - a \cdot \sin\theta_1) \qquad (7)$$

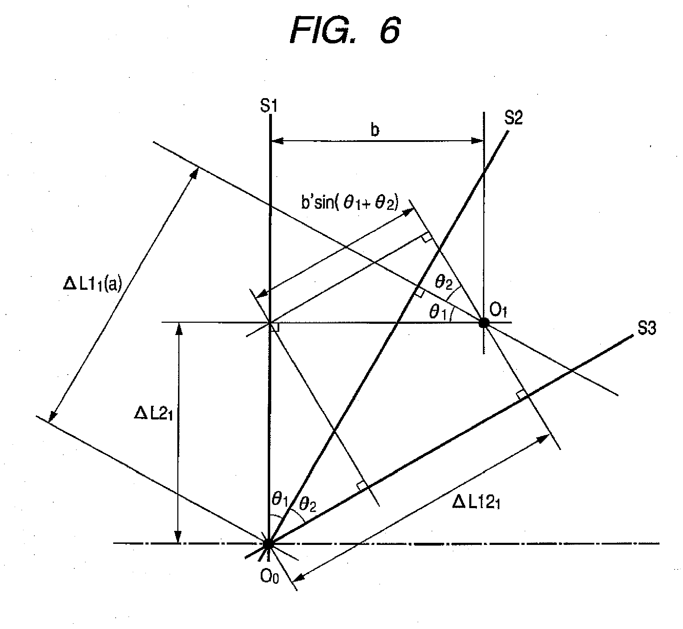

Here, from FIG. 6,

$$\Delta L12_1 - b \cdot \sin(\theta_1 + \theta_2) = \Delta L2_1 \cdot \cos(\theta_1 + \theta_2) \qquad (8)$$

$$\Delta L2_1 = [\Delta L12_1 - b \cdot \sin(\theta_1 + \theta_2)]/[\cos(\theta_1 + \theta_2)] \qquad (9)$$

$$a \cdot \cos\theta_1 - \tan\theta_1 \cdot (b - a \cdot \cdot \sin\theta_1) = [\Delta L12_1 - b \cdot \sin(\theta_1 + \theta_2)]/[\cos(\theta_1 + \theta_2)] \qquad (10)$$

$$b = [a \cdot (\cos\theta_1 + \sin\theta_1 \cdot \tan\theta_1) \cdot \cos(\theta_1 + \theta_2) - \Delta L12_1]/[\tan\theta_1 \cdot \cos(\theta_1 + \theta_2) - \sin(\theta_1 + \theta_2)] \qquad (11)$$

Hence, $\Delta L2_1$ can be obtained with arguments included in the following two formulas, that is, a mutually forming angle and measured values of the sensors for detecting displacement.
From the above-mentioned formula 7,

$$\Delta L2_1 = \Delta L1_1 \cdot \cos\theta_1 - \tan\theta_1 \cdot (b - \Delta L1_1 \cdot \sin\theta_1) \qquad (12)$$

$$b = [\Delta L1_1 \cdot (\cos\theta_1 + \sin\theta_1 \cdot \tan\theta_1) \cdot \cos(\theta_1 + \theta_2) - \Delta L12_1]/[\tan\theta_1 \cdot \cos(\theta_1 + \theta_2) - \sin(\theta_1 + \theta_2)] \qquad (13)$$

From $\Delta L2_1$ obtained using the above-mentioned formulas 12 and 13, $L2_0$ is obtained as $L2_0 = L2_1 - \Delta L2_1$.
As a third step, the measured cylinder is rotated further by 30° rightward. Then, the measuring points $2_1$, $1_1$ and $12_1$ on the circumference in the above-mentioned second stage are respectively moved to $2_2$, $1_2$ and $12_2$, and the sensors S1, S2, and S3 for detecting displacements become ready to measure distances between the points $3_2$, $2_2$ and $1_2$ on the circumference and the measurement reference point $O_0$ respectively. In addition, the floating center $O_{n=1}$ further moves to $O_{n=2}$. Next, distances between the points $3_2$, $2_2$ and $1_2$ on the circumference and the measurement reference point $O_0$ are respectively measured using the sensors S1 to S3 for detecting displacements. A moving distance from the floating center $O_{n=o}$ to $O_{n=2}$ is calculated by the same method as the above-described method using these measured values. Furthermore, by using the calculation result, a moving distance ($\Delta L3_2$) of $O_{n=2}$ from $O_{n=0}$ on the measurement axis (y-axis) of the sensor S1 for detecting a displacement is obtained, and a distance between the floating center $O_{n=0}$ and the point $3_0$ on the circumference is obtained from there. Hereinafter, similarly, the cylinder is rotated by 30° at a time for distances $L4_0$, $L5_0$, $L6_0$, $L7_0$, $L8_0$, $L9_0$ and $L10_0$ between the floating center $O_{n=0}$ and points $4_0$, $5_0$, $6_0$, $7_0$, $8_0$, $9_0$ and $10_0$ on the circumference to be obtained, respectively. When calculating $L11_0$ and $L12_0$ using the same method at this time, the measurement result with higher accuracy can be obtained.
In addition, an error which is expected to arise when rotating the measured cylinder 1 according to measurement, and is caused by a rotation angle will be referred to. Let a rotation error angle be $\theta°$, let a distance between the circumference on the detection axis and the measurement reference position $O_0$ be $L_1$, and let a distance from the measurement

reference position $O_0$ on an axis which intersects the detection axis with forming the above-mentioned rotation error angle with the measurement reference position $O_0$ to the circumference be $L_2$. Then, the error $\Delta L'$ given to the detection distance is given as the following formula:

$$\Delta L' = L_1 - L_2 \cdot \cos\theta$$

and hence, $\Delta L'$ is very small. As an example, when a mean radius of a measuring object circle is 50 mm and 0.1° of rotation error arises, $\Delta L'$ is nearly 0.076 $\mu$m. This numerical value is $1.5 \times 10^{-4}$% to a measured value as an error. When taking into consideration that it is possible to expect that the reproducibility of stopping accuracy of a general and low-price rotating mechanism is about 0.04° sufficiently in addition to the measurement reproducibility of the above-mentioned ordinary displacement measuring instrument, it can be said that the influence of this error given to the measurement result is extremely small.

Then, a circle central position and each radial distance in a position in rectangular coordinate position are calculated from the obtained distances $L1_0$ to $L12_0$ using the known least-square circle center method.

Next, let the floating center $O_{n=0}$ be an origin (0, 0) in orthogonal coordinates, and positions of measuring points $1_0$ to $12_0$ on the circumference in the orthogonal coordinates will be obtained from distances $L1_0$ to $L12_0$. For the convenience of calculation, i is once substituted for n to be made an argument of the measuring points $1_0$ to $12_0$, and let components of the rectangular coordinate position be $x_i$ and $y_i$. They can be obtained by the following formulas:

$$X_i = L_1 \cdot \sin\{-\theta_1 \cdot (i - 1)\}$$

$$y_i = L_1 \cdot \cos\{-\theta_1 \cdot (i - 1)\}$$

In addition, a reason why $\theta_1$ is used as a negative angle in the above formula is because of expressing a position of each measuring point in the orthogonal coordinates in conformance to FIG. 3. Let the Y-axis of the rectangular coordinate system be 0°, and the angle is added sequentially counterclockwise.

Here, let a position of the true circle center O in the orthogonal coordinates be O (x, y), and it is possible to obtain them from the following formulas:

$$x = \frac{2\sum x_i}{12} \qquad y = \frac{2\sum y_i}{12}$$

At this time, a number 12 given to denominators of both of left and right items is a number obtained by dividing 360° by $\theta_1$, that is, 30°, and this number changes with $\theta_1$.

Then, a roundness A will be obtained. With substituting the obtained O (x, y) for the origin (0, 0), let positions of the measuring points $1_0$ to $12_0$ on the circumference, which move with this, be $1_0'$ to $12_0'$. Then, components $(x_n, y_n)$ of rectangular coordinate position are given from the following formulas:

$$X_n = X_i - x, \quad Y_n = Y_i - Y$$

True radial displacement amounts $L1_0'$ to $L12_0'$ are given from components $(x_n, y_n)$ of the rectangular coordinate positions $1_0'$ to $12_0'$ which are obtained, with the following formulas:

$$L_n' = \sqrt{x_n{}^2 + y_n{}^2}$$

At this time, it is possible to obtain the roundness A of a cross-sectional circle orthogonal to a central axis as the difference between maximum and minimum values of $L1_0'$ to $L12_0'$.

The above measurement and calculation is performed for a desired cross-sectional circle, which is orthogonal to each central axis of the measured cylinder 1, and a circle center position and a radial displacement amount of each measured cross-sectional circle are obtained.

Next, a cylindricity of the measured cylinder 1 will be obtained.

A position of each intersection of a straight line connecting both circle centers of two cross-sectional circles, which are orthogonal to a central axis and are both ends of the measured cylinder 1, among the cross-sectional circles which are orthogonal to each measured central axis and are measured, and other cross-sectional circles orthogonal to respective central axes will be obtained by distance proportion. Then, a displacement amount on a straight line connecting each intersection, mentioned above, and each measuring point on a circumference is calculated as a radial distance using the method shown in formula 13. Here, it is possible to obtain the difference between maximum and minimum values of all the obtained distances as a cylindricity of the measured cylinder.

Since the measuring method described above is small in degrees of functions being influenced according to an outer diameter, an internal diameter, and a length of a measured cylinder, for example, in an outer diameter, it is possible to use this from a very thin object of about 5 mm to a thick object of several meters. Furthermore, there are many displacement detection means which can be used for this measuring method, and it is effective to use means of, for example, an electric micrometer, an eddy current type displacement detector, a laser displacement detector, a dial gauge, or the like. In addition, when there is a possibility of affecting measurement result because of generating elastic deformation such as bending in response to the influence of gravity during measurement because of the measured cylinder being too much thin to own length and weight, soft as a material, very thin, or the like, it is effective to perform measure by bringing the cylinder central axis of the measured cylinder closely to and in parallel to gravity or another external active direction.

In addition, in order to increase further the accuracy of a cylindricity to be finally obtained, it is preferable that a position of a cross-section orthogonal to a central axis of both ends is closer to the both end sections of a measured cylinder.

Here, when performing measurement by a plurality of rotations with changing a position in a cylinder axial direction like the above-mentioned measurement of a cylindricity, the accuracy of means of moving a sensor for detecting a displacement in parallel to a direction of a cylinder axis like the above-mentioned guide rails 4 generally becomes important. Nevertheless, a shape of a locus of the above-mentioned floating center obtained when a measured cylinder rotates at the time of measurement is nearly a circle. In addition, when a measured cylinder is placed on runner-like cylinder support jigs like the above and rotates, the same rotation will be repeated, if the rotational vibration of the runner-like cylinder support jigs is very small. Thus, even if a measured cylinder rotates two or more times, all the points on a cylindrical surface follow the always almost same locus every rotation. From this, even if a plurality of loci of the above-mentioned floating center are obtained when measurement is performed by a plurality of rotations with a position in a direction of a cylinder axis being changed like the measurement of a cylindricity, all the loci, that is, circular shapes have almost concentric relation, or even if they are not circular, they have similar shapes which share a center position. Hence, when arranging a plurality of cross-sectional circles, obtained by measurement, with the above-mentioned center position as a common basis, it becomes possible to calculate and measure a cylindricity which is not affected by the accuracy of moving means of a sensor for detecting a displacement like the above-mentioned guide rails 4.

Furthermore, it is also effective in shortening of measuring time to perform measurement by a sensor for detecting a displacement without stopping rotation in each measurement position when rotating a measured cylinder in measurement of a circumferential shape of a cross-sectional circle orthogonal to each cylinder central axis.

Moreover, it is also very effective to perform measurement only in smaller times of rotations, and in particular, one rotation by measuring circumferential shapes of a plurality of cross-sectional circles orthogonal to the cylinder central axis simultaneously using a plurality of above-mentioned mounts which fix each sensor for detecting a displacement.

Although the present invention will be explained below specifically using examples, the present invention is not limited by such examples.

(Example 1)

Ten A3003 aluminum pipes which had been given machining beforehand as a measured cylinder, and which had a machining set outer diameter of 84.0 mm, an inner diameter of 78.0 mm, and a length of 360.0 mm were prepared, and were named Sample No. 1 to Sample No. 10.

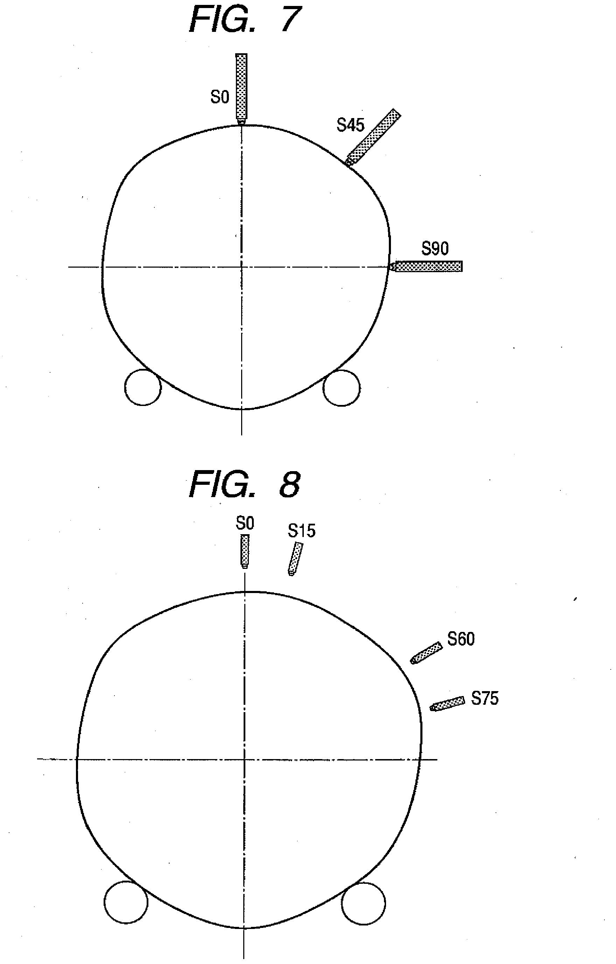

The measured cylinder Sample No. 1 was placed on a cylinder support jig of a cylinder measuring instrument where, as shown in FIG. 7, three sensors S0, S45 and S90 for detecting displacements were arranged in a shape formed by connecting a measurement reference point and said three sensors being a fan shape with measurement axes of respective sensors for detecting displacements intersecting with each other at a predetermined point within a cross-sectional circle orthogonal to an axis of the cylinder, and with forming an angle of 45° with adjacent one of the sensors with the point as a center. The above-mentioned three sensors for detecting displacements were arranged apart 80 mm from an end of the measured cylinder in a central axis direction of the cylinder, and each sensor for detecting a displacement used was an MCH335 electric micrometer made by Mitsutoyo Co., Ltd. Then, measurement was performed totally 8 times with the above-mentioned rotation drive transfer machine by rotating the cylinder by 45° every measurement. In addition, a distance from the intersection of the above-mentioned detection axes to each sensor for detecting a displacement had been measured beforehand, and a measured value of the sensor for detecting a displacement in this embodiment is shown as a value measured a distance from the intersection point of respective detection axes to an intersection point of a cylindrical surface on the same cross-section orthogonal to a rotation axis of the measured cylinder and each of the above-mentioned detection axes.

The measured cylinder was rotated at 6 revolutions per minute when measuring. Measurement was performed with defining that the time which the measurement took at this time was the time required from placing the measured cylinder on the above-mentioned cylinder support jig to completing one rotation of the measured cylinder for measurement.

Hereinafter, in tables in drawings used in the first example, measurement in S0 position at the time of measurement start is set to 0°, and 45° is added by turns to a position on the circumferential surface which arrives S0 according to a rotation of the measured cylinder.

In order to obtain a moving distance of the above-mentioned floating center, each moving distance on the detection axes of the sensors for detecting displacements S45 and S90 is calculated using the above-mentioned formulas 1 and 2. At this time, a moving distance on each axis is calculated as difference between a measured value of S45 and a measured value of S0 before 45° of rotation on the detection axis of S45, and difference between a measured value of S90 and a measured value of S45 before 45° of rotation on the detection axis of S90, respectively.

Next, using the above-mentioned formula 13, $\Delta x$ in a rectangular coordinate position was obtained, and $\Delta y$ was calculated next, using the above-mentioned formula 12. Here, $\Delta x$ and $\Delta y$ are moving distances of the floating center $O_n$ shown in a rectangular coordinate position. Then, a true value of an S0 position, that is, a distance to a measured cylinder surface on the basis of the floating center $O_n$ was calculated by subtracting this $\Delta y$ from the measured value of S0.

Next, a distance to each point on the basis of the floating center $O_n$ was converted into a rectangular coordinate position. Using $X_n$ and $Y_n$ obtained in this way, a true circle center coordinates O (x, y) were obtained by the above-mentioned least-square circle center method, and a center X coordinate and a center Y coordinate were obtained.

Then, distances of the X axial component and Y axial component from the obtained center coordinate position to each point, a direct distance to each point, that is, a radial distance of each true point, and further, a roundness was obtained from the difference of a maximum value and a minimum value of them.

About the above, Sample No. 2 to Sample No. 10 were measured similarly, and the above-mentioned durations and roundnesses were obtained.

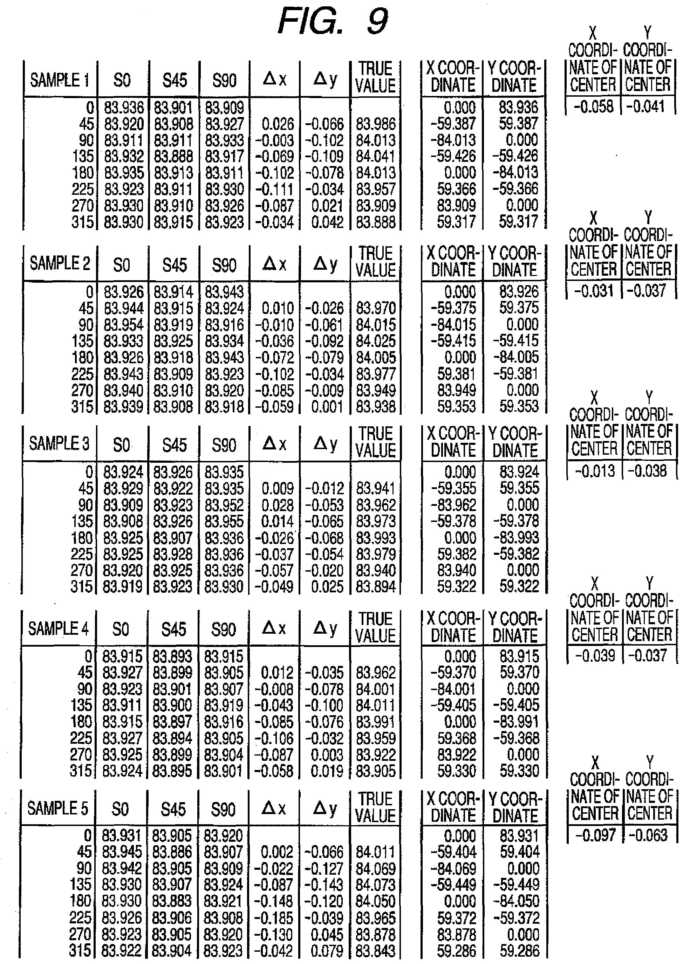

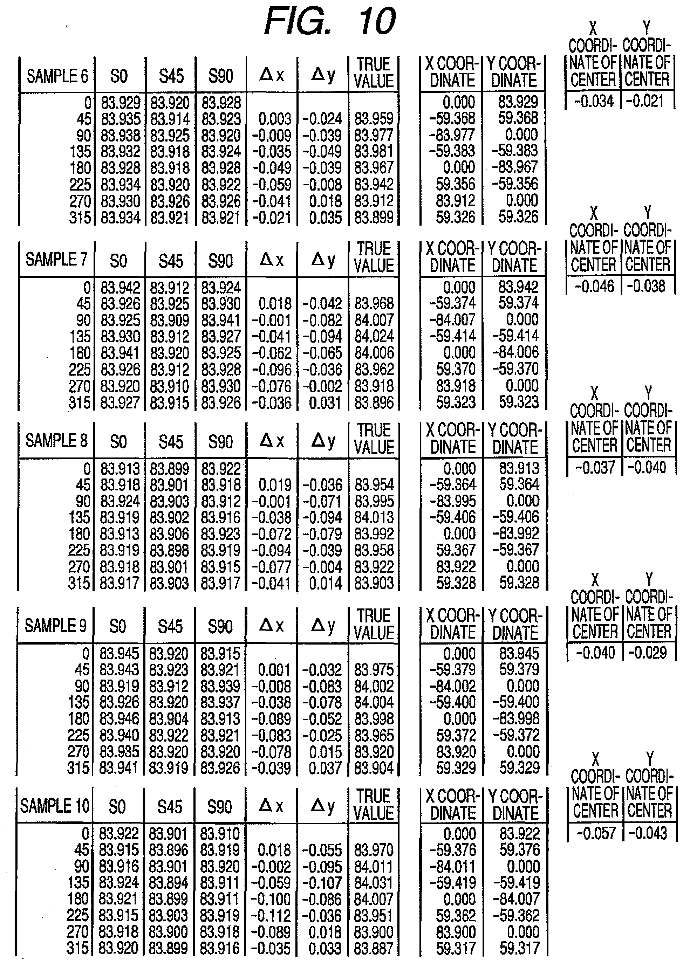

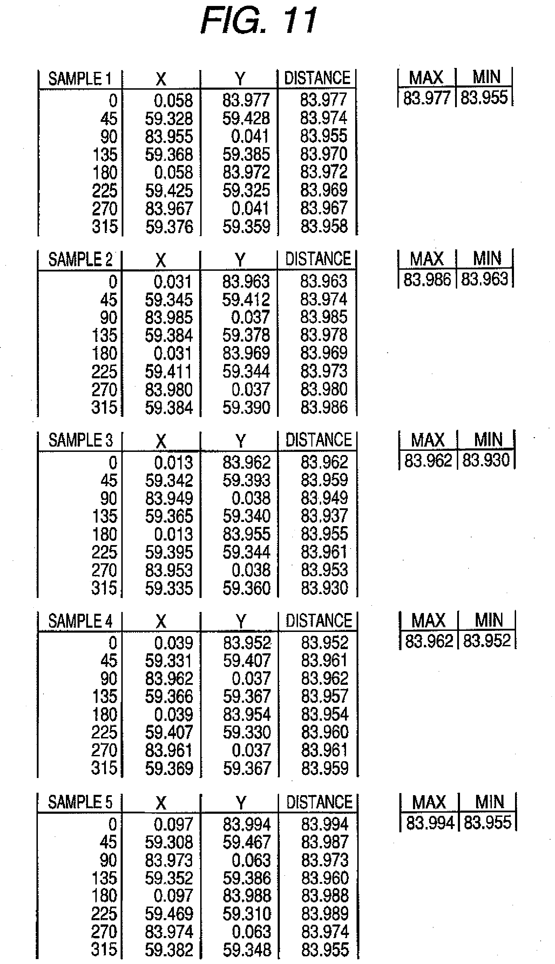

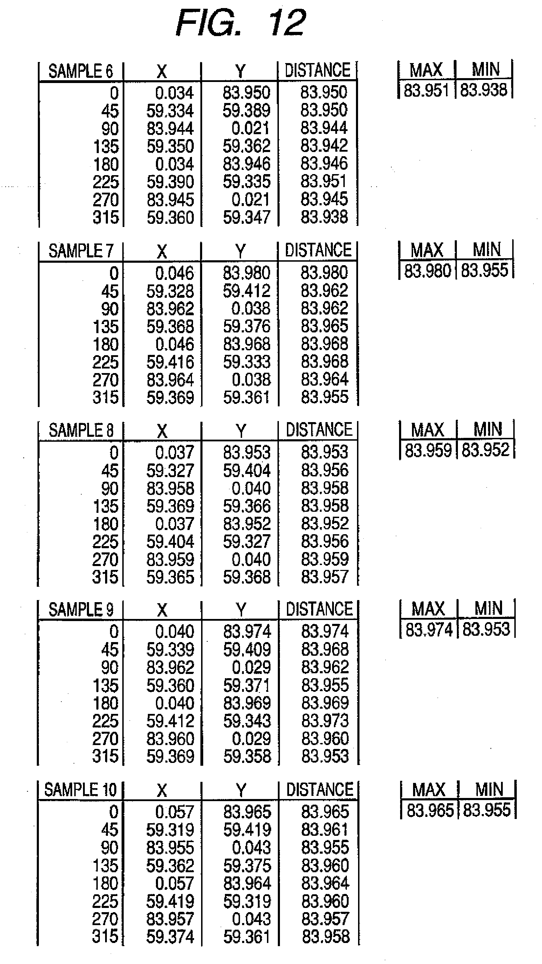

FIGS. 9 and 10 show data from measured values of each of the above-mentioned sensors for detecting displacements to the above-mentioned circle center coordinate positions among data obtained by the above measurement. Then, FIGS. 11 and 12 show distances of the X axial component and Y axial component from the above-mentioned center coordinate position to each point, distances to each point, and maximum and minimum values of them.

(Comparative example 1)

Each outer surface roundness at a position apart 80 mm from the lower edge at the time of placement of the measured cylinder in a direction of the cylinder central axis was measured for the aluminum pipes Sample No. 1 to Sample No. 10 measured in the first example using a roundness measuring instrument (trade name: round test RA-H5000AH, made by Mitsutoyo Co., Ltd.). Each duration for measurement was measured as the time required from placing the measured cylinder on a rotary table to completing a series of programs which continuously ran for automatic centering, automatic leveling, and automatic measurement.

In addition, as for the above-mentioned automatic centering and an automatic leveling steps, an automatic and high-speed mode was adopted, a centering position was set at 20 mm from a lower edge of the measured cylinder, a leveling position was set at 80 mm from the above-mentioned lower edge, a magnification was set at 5000$\times$, an area was set at 8 $\mu$m, and the rotating speed of the rotary table was set at 10 rpm. Then, the automatic centering, automatic leveling, and roundness measurement were implemented. In addition, when placing the measured cylinder on the above-mentioned rotary table, the measured cylinder was directly placed without using a three-claw chuck, made by the company, and other fixtures in consideration of shortening of the measurement time. In addition, in order to delete the increase of the above-mentioned duration arising from a plurality of operation of the automatic centering and automatic leveling, data of measurement which required two or more times of automatic centering or automatic leveling was not adopted as data, measurement was retried until the measurement which required only one operation of automatic centering or automatic leveling was achieved, and this data was adopted as the data of the duration.

(Evaluation)

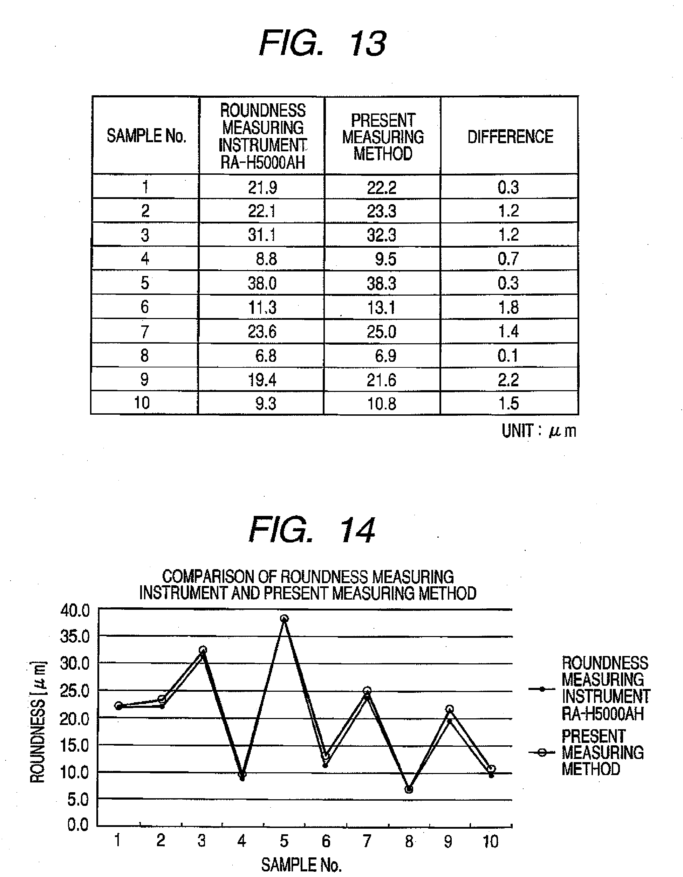

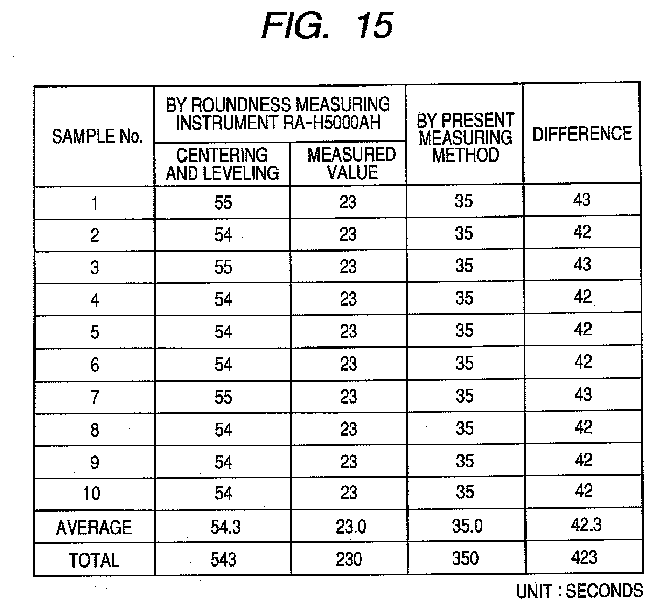

FIGS. 13 and 14 show a value of each roundness and each difference measured in the first example and first comparative example. In addition, FIG. 15 shows each duration measured in the first example and first comparative example.

From FIGS. 13 and 14, the difference between the measurement results by respective measuring methods, that is, the first example and first comparative example is 2.2 $\mu$m at the maximum, and hence, it can be judged that it is sufficiently small.

In addition, from FIG. 15, it is possible to confirm that a measurement duration of the first example is shortened by 54.7% to a measurement duration of the first comparative example.

(Example 2)

An A3003 aluminum pipe which had been given machining beforehand as a measured cylinder, and which had a machining set outer diameter of 80.0 mm, an inner diameter of 74.0 mm, and a length of 360.0 mm was prepared.

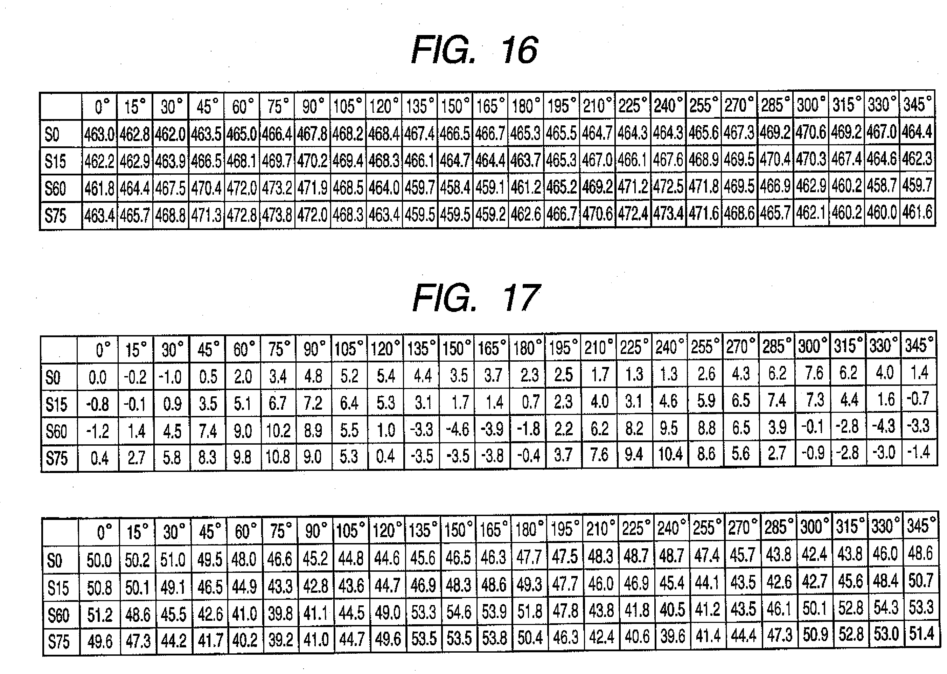

This measured cylinder was placed on the cylinder support jig of the same cylinder measuring instrument as that in FIG. 2. Sensors S0, S15, and S60 and S75 for detecting displacements were arranged on a mount, which is shown in FIG. 8, so that the sensors for detecting displacements might be located on the same cross-section, which was orthogonal to a rotation axis and was apart 30 mm from an end of the measured cylinder in a direction of a cylinder central axis, and might be oriented to an intersect point of the rotation axis of the measured cylinder and the cross-section orthogonal to the rotation axis, with the above-mentioned intersection point as a center, and with forming an angle of 15° with one another, respectively. Furthermore, S0 and S60 were arranged so that they might form an angle of 60°. As each sensor for detecting a displacement, an eddy current type sensor for detecting a displacement made by KAMAN Corp. was used, and a position of each sensor for detecting a displacement was adjusted so that each distance from the above-mentioned intersection point might become equal. Then, measurement was performed totally 24 times with the above-mentioned rotation drive transfer machine by rotating the cylinder by 15° every measurement. A displacement amount between each sensor for detecting a displacement and a surface of the measured cylinder was measured as a distance. Hereinafter, in tables in drawings used in the second and third examples, measurement in an S0 position at the time of measurement start is set to 0°, and 15° is added by turns to a position on the circumferential surface which arrives S0 according to a rotation of the measured cylinder. This is shown in FIG. 16.

Next, in order to regard each measured value as a differential value for convenience of calculation, let a first measured value, that is, a measured value of the sensor S0 for detecting a displacement at the time of the measured cylinder not rotating once be 0, and all the other measurement results are calculated as differentials between with S0. In addition, in order to perform subsequent calculation smoothly, all the differential values are converted into positive numbers. In this example, all the differential values were subtracted from 50 $\mu$m which was an arbitrary constant to be made positive numerical values. This is shown in FIG. 17.

Next, in order to obtain a moving distance of the above-mentioned floating center, each moving distance on the detection axes of the sensors S15 and S75 for detecting displacements is calculated using the above-mentioned formula (2). At this time, the moving distance on each axis is calculated as difference between a measured value of S15 and a measured value of S0 before 15° of rotation on the detection axis of S15, and difference between a measured value of S75 and a measured value of S60 before 15° of rotation on the detection axis of S75, respectively.

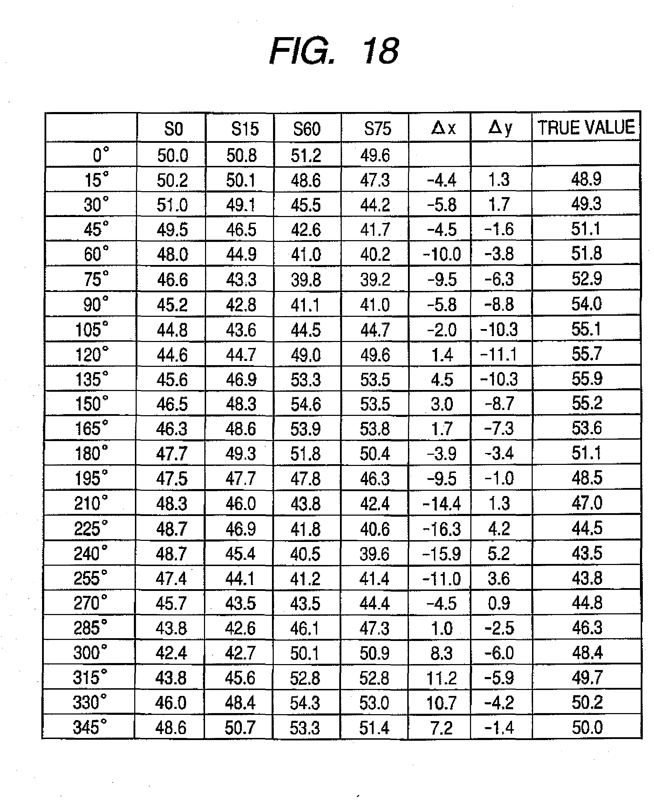

$\Delta$x in a rectangular coordinate position was obtained from the obtained moving distances on the two axes using a term b among the formulas shown in the above-mentioned formula 12, and $\Delta$y was calculated next, using a term of $\Delta 2_1$ shown in the above-mentioned formula 12. Then, a true value of an S0 position, that is, a displacement amount of a surface of the measured cylinder 1 on the basis of the floating center $O_n$ was obtained by subtracting this $\Delta$y from the measured value of S0. Hereinafter, residual measurements of the measured cylinder to one-round measurement were performed similarly. This is shown in FIG. 18.

Next, the true center of a circle will be obtained.

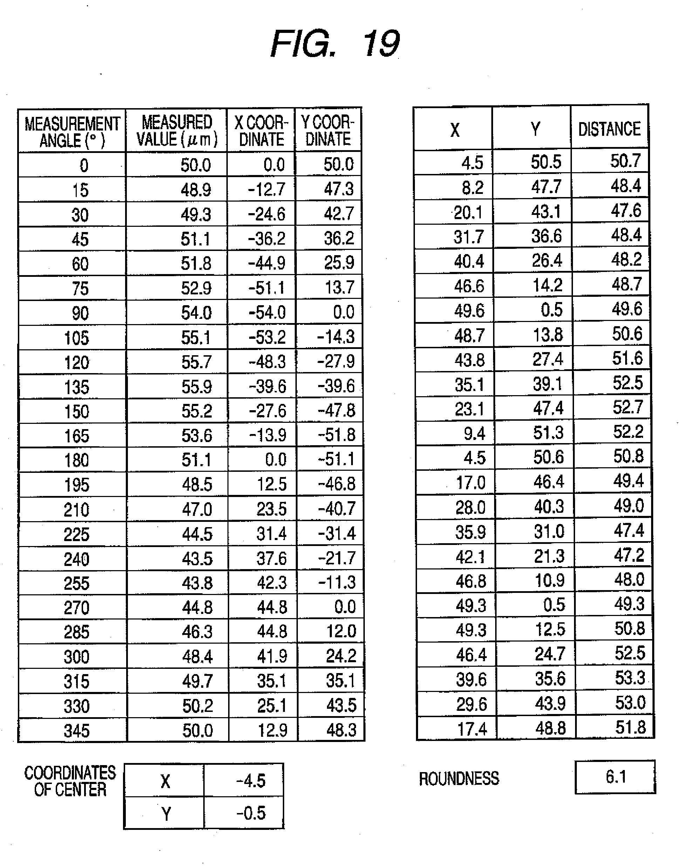

The displacement amounts of respective points on the basis of the floating center $O_n$ which had been obtained in FIG. 18 were converted into rectangular coordinate components. Then, using $X_n$ and $Y_n$ obtained in this way, a true circle center coordinates O (x, y) were obtained by the above-mentioned least-square circle center method, and (-4.5, -0.5) was obtained. In addition, 6.1 $\mu$m was obtained as the roundness by obtaining the displacement amounts of X axial component and Y axial component in each point on the basis of the floating center On, the true displacement amount in the radial direction to each point, and the difference between a maximum value (53.3 $\mu$m) and a minimum value (47.2 $\mu$m) of them. This is shown in FIG. 19.

(Example 3)

Let 20 cross-sectional circles, which were apart 30 mm, 35 mm, 40 mm, 60 mm, 80 mm, 90 mm, 120 mm, 140 mm, 150 mm, 180 mm, 200 mm, 210 mm, 240 mm, 260 mm, 270 mm, 300 mm, 310 mm, 320 mm, 330 mm, and 350 mm from one end of the measured cylinder 1 toward another end and were orthogonal to a cylinder central axis, be measured circles. Then, using the instrument described in the second example, measurements at 24 points totally every 15° per one-round measurement were performed to these, respectively, and the distance between each sensor for detecting a displacement and the surface of the measured cylinder was obtained.

Next, after the measured values being made positive differential values using the same method as that in the second example, displacement amounts of a surface of a measured cylinder on the basis of the floating center $O_n$ of each measured circle were obtained similarly to the second example.

Next, similarly to the second example, X and Y axial components of a displacement amount of each point on the basis of the center coordinates of each measured circle, that is, the floating center $O_n$, a maximum value and a minimum value of each circle, and a roundness by these were obtained.

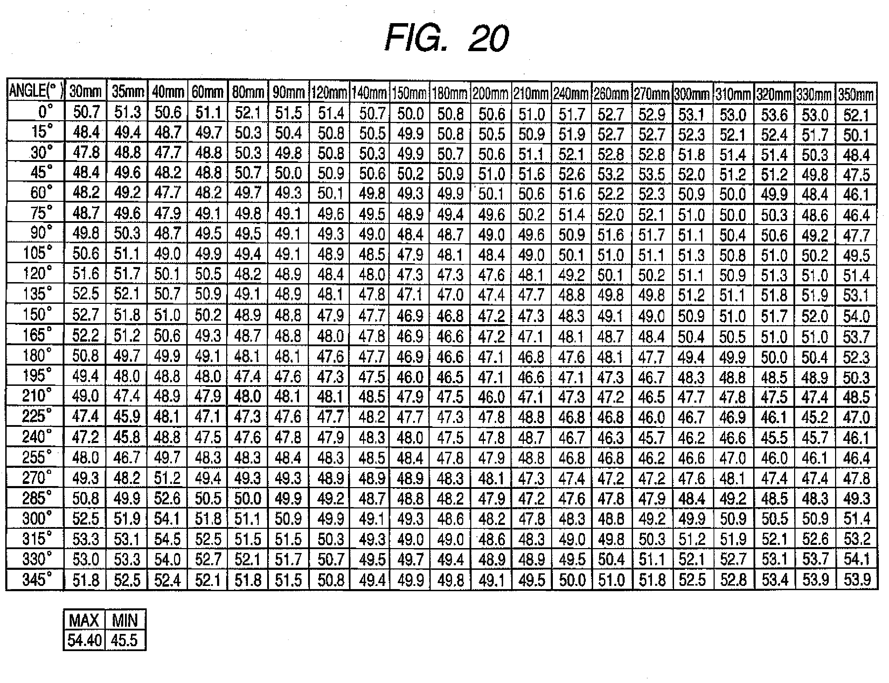

Then, what were obtained were positions of intersections of a straight line connecting both circle centers of two measured circles, located in both ends among the 20 measured circles which were measured, that is, the circle at the 30 mm position in the direction of the cylinder central axis and the circle at the 350 mm position, and other measured circles by the distance proportion. Next, a displacement amount as x and y coordinate components of each measuring point on the circumference on the basis of the above-mentioned each intersection was calculated every measured circle. Furthermore, a radial displacement amount of each measuring point on the circumference on the basis of the above-mentioned each intersection was calculated from the displacement amount as the above-mentioned each coordinate component. This is shown in FIG. 20. Here, 9.0 $\mu$m of cylindricity of the measured cylinder was obtained with the difference of a maximum value (54.5 $\mu$m) and a minimum value (45.5 $\mu$m) of all the obtained distances.

(Example 4)

Ten A3003 aluminum pipes which had been given machining beforehand as measured cylinders, and which had a machining set outer diameter of 30.0 mm, an inner diameter of 28.5 mm, and a length of 260.0 mm were prepared.

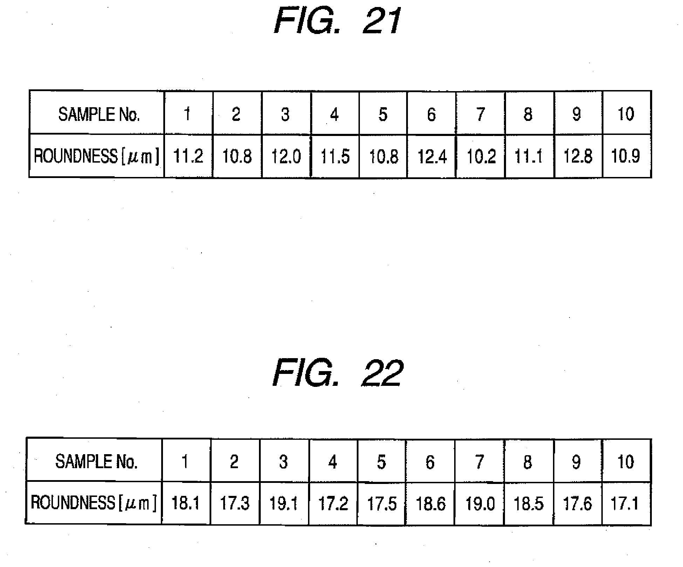

This measured cylinder was placed on the cylinder support jig of the same cylinder measuring instrument as that in FIG. 2. Let 12 cross-sectional circles, which were apart 30 mm, 40 mm, 60 mm, 80 mm, 90 mm, 120 mm, 140 mm, 150 mm, 180 mm, 200 mm, 210 mm, and 240 mm from one end of the measured cylinder 1 toward another end and were orthogonal to a cylinder central axis, be measured circles. A cylindricity was measured by the same method as that in the third example to these, respectively. This result is shown in FIG. 21.

(Example 5)

Ten A3003 aluminum pipes which had been given machining beforehand as measured cylinders, and which had a machining set outer diameter of 180.0 mm, an inner diameter of 174.0 mm, and a length of 370.0 mm were prepared.

This measured cylinder was placed on the cylinder support jig of the same cylinder measuring instrument as that in FIG. 2. Let 20 cross-sectional circles, which were apart 30 mm, 35 mm, 40 mm, 60 mm, 80 mm, 90 mm, 120 mm, 140 mm, 150 mm, 180 mm, 200 mm, 210 mm, 240 mm, 260 mm, 270 mm, 300 mm, 310 mm, 320 mm, 330 mm, and 350 mm from one end of the measured cylinder 1 toward another end and were orthogonal to a cylinder central axis, be measured circles. A cylindricity was measured by the same method as that in the third example to these, respectively. This result is shown in FIG. 22.

Since the present invention makes cylindrical measurement easy, its utilization is expected as technology for producing an accurate cylindrical member.

**Claims**

1.   A measuring method of a shape of a cross-sectional circle, which is orthogonal to an axis of a cylinder, by the following steps (i) to (vi) using measuring means which is constructed of a cylinder support jig, and a mount which has three or more sensors for detecting displacements which are located on the same cross-section orthogonal to a rotation axis of the cylinder, and outside the cylinder, are oriented to a measurement reference point ($O_0$) which is an intersection point of the rotation axis of the cylinder, and the cross-section orthogonal to the rotation axis, and are arranged and fixed in a shape formed by connecting said measurement reference point ($O_0$) and said three or more sensors being a fan shape with forming a predetermined angle ($\theta°$) mutually with $\theta_0$ as a center, comprising:

    (i) a step of measuring distances (L1 to Lm) from the measurement reference point ($O_0$) on each detection axis to points on a circumference of the cross-sectional circle orthogonal to the axis of the cylinder by the sensors (S1 to Sm) for detecting m pieces of displacements, wherein m is three or more; **characterized in that** it further comprises the following steps:

    (ii) a step of rotating the cylinder by the predetermined angle ($\theta°$) in a direction of a first sensor S1 to a second sensor S2, and again measuring the distances from the measurement reference point ($O_0$) on each detection axis to the points on the circumference of the cross-sectional circle orthogonal to the axis of the cylinder by the sensors for detecting displacements,

(iii) a step of calculating a position of a floating center O' from the change of measurements by the sensors for detecting displacements of the cylinder before and after rotation by the predetermined angle ($\theta°$), wherein the floating center O' is a virtual center of the cross-sectional circle which may move by the rotating of the cylinder;

(iv) a step of calculating a distance ($O_0$ - O') on an axis of the sensor Sm for detecting a displacement and measuring new distances from O' on the axis of the sensor Sm for detecting a displacement to the points on the circumference of the cross-sectional circle which is orthogonal to the axis of the cylinder,

(v) a step of measuring n pieces of distances by repeating said steps (ii) to (iv), and

(vi) a step of calculating a circumferential shape of the cross-sectional circle using the respective distances obtained.

2. A measuring method of a shape of a cross-sectional circle, which is orthogonal to an axis of a cylinder, by the following steps (i) to (vi) using measuring means which is constructed of a cylinder support jig, and a mount which has four sensors for detecting displacements which are arranged and fixed in a shape formed by connecting a measurement reference point ($O_0$ and said four sensors being a fan shape, said measurement reference point ($O_0$ being an intersection point of the rotation axis of the cylinder and the cross-section orthogonal to the rotation axis, and are **characterized by** having two sensors SA and SB for detecting displacements are oriented to said measurement reference point ($O_0$), and are arranged with forming a predetermined angle ($\theta°$) with $O_0$ as a center, and two sensors SA' and SB' for detecting displacements which are arranged with forming the predetermined angle ($\theta°$) with $O_0$ as a center, and said four sensors are located on the same cross-section orthogonal to a rotation axis of the cylinder, and outside the cylinder, comprising:

(i) a step of measuring distances ($L_1$ to L4) from the measurement reference point ($O_0$) on each detection axis to points on a circumference of the cross-sectional circle orthogonal to the axis of the cylinder by the sensors for detecting displacements, **characterized in that** it further comprises the following steps:

(ii) a step of rotating the cylinder by the predetermined angle ($\theta°$) in a direction of a first sensor SA to a second sensor SB, and again measuring the distances from the measurement reference point ($O_0$) on each detection axis to the points on the circumference of the cross-sectional circle orthogonal to the axis of the cylinder by the sensors for detecting displacements,

(iii) a step of calculating a position of a floating center O' from the change of measurements by the sensors for detecting displacements of the cylinder before and after rotation by the predetermined angle ($\theta°$), wherein the floating center O' is a virtual center of the cross-sectional circle which may move by the rotating of the cylinder;

(iv) a step of calculating a distance ($O_0$ - O') on an axis of the sensor Sm for detecting a displacement and measuring new distances from O' on the axis of the sensor Sm for detecting a displacement to the points on the circumference of the cross-sectional circle which is orthogonal to the axis of the cylinder,

(v) a step of measuring n pieces of distances by repeating said steps (ii) to (iv), and

(vi) a step of calculating a circumferential shape of the cross-sectional circle using the respective distances obtained.

3. The measuring method according to claim 1 applied to obtain a cylindricity of the cylinder, wherein the following steps (vii) and (viii) are performed in addition to steps (i) to (vi):

(vii) a step of moving the mount in parallel to the rotation axis of the cylinder and calculating a circumferential shape of each of the cross-sectional circles by said steps (i) to (vi) about different cross-sectional circles of the cylinder,

(viii) a step of obtaining differences between a maximum value and a minimum value of distances, said distance being that from each intersection point of a cylinder central axis which is a straight line connecting circle centers of two cross-sectional circles in both ends of the cylinder among cross-sectional circles whose circumferential shapes are calculated by said steps (i) to (vii) and said cross-sectional circles other than those in both ends of the cylinder, to a predetermined point on the circumference of each of said cross-sectional circle.

4. The measuring method according to claim 2 applied to obtain a cylindricity of the cylinder, wherein the following steps (vii) and (viii) are performed in addition to steps (i) to (vi):

(vii) a step of moving the mount in parallel to the rotation axis of the cylinder and calculating a circumferential shape of each of the cross-sectional circles by said steps (i) to (vi) about different cross-sectional circles of the cylinder,

(viii) a step of obtaining differences between a maximum value and a minimum value of distances, said distance being that from each intersection point of a cylinder central axis which is a straight line connecting circle centers of two cross-sectional circles in both ends of the cylinder among cross-sectional circles whose circumferential shapes are calculated by said steps (i) to (vii) and said cross-sectional circles other than those in both ends of the cylinder, to a predetermined point on the circumference of each of said cross-sectional circle.

5. The measuring method of a cylindrical shape of a cylinder according to claim 3 or 4, wherein a sensor for detecting a displacement is arranged inside the cylinder to obtain a wall thickness, a circle center of an inner circumferential circle, and a roundness of the cylinder.

6. A measuring method of a cylindrical shape of a composite cylinder, comprising the steps of measuring at least one cylinder, which constitutes the composite cylinder, by the method of claim 3 or 5, for the composite cylinder which is constituted of a plurality of cylinders whose diameters are different, and shares a rotation axis in outer circumferential circles of all the cylinders, measuring cylindrical shapes of cylinders other than the one cylinder using at least one sensor for detecting a displacement respectively, and obtaining all cylindrical shapes, concentricities, and wall thicknesses of the composite cylinder.

7. A measuring apparatus of a shape of a cylinder, comprising measuring means which is constructed of a cylinder support jig, and a mount which is provided reciprocably in parallel to a rotation axis of the cylinder and has three or more sensors for detecting displacements which are located on the same cross-section orthogonal to the rotation axis of the cylinder, and outside the cylinder, are oriented to a measurement reference point ($O_0$) which is an intersection point of the rotation axis of the cylinder, and the cross-section orthogonal to the rotation axis, and are arranged and fixed in a shape formed by connecting said measurement reference point ($O_0$) and said three or more sensors being a fan shape with forming a predetermined angle ($\theta°$) mutually with $O_0$ as a center, and calculation means configured for executing the following step (i):

(i) a step of measuring distances (L1 to Lm) from a measurement reference point ($O_0$) on each detection axis to points on the circumference of the cross-sectional circle orthogonal to the axis of the cylinder by the sensors (S1 to Sm) for detecting m pieces of displacements, wherein m is three or more; **characterized in that** the calculation means is configured for executing the following further steps:

(ii) a step of rotating the cylinder by the predetermined angle ($\theta°$) in a direction of a first sensor S1 to the second sensor S2, and again measuring the distances from the measurement reference point ($O_0$) on each detection axis to points on the circumference of the cross-sectional circle orthogonal to the axis of the cylinder by the sensors for detecting displacements,

(iii) a step of calculating a position of a floating center O' from the change of measurements by the sensors for detecting displacements of the cylinder before and after rotation by the predetermined angle ($\theta°$), wherein the floating center O' is a virtual center of the cross-sectional circle which may move by the rotating of the cylinder;

(iv) a step of calculating a distance ($O_0$ - O') on an axis of the sensor Sm for detecting a displacement and measuring new distances from O' on the axis of the sensor Sm for detecting a displacement to the points on the circumference of the cross-sectional circle which is orthogonal to the axis of the cylinder,

(v) a step of measuring n pieces of distances by repeating said steps (ii) to (iv),

(vi) a step of calculating a circumferential shape of the cross-sectional circle using the respective distances obtained,

(vii) a step of moving the mount in parallel to the rotation axis of the cylinder and calculating a circumferential shape of each of the cross-sectional circles by said steps (i) to (vi) about different cross-sectional circles of the cylinder,

(viii) a step of obtaining differences between a maximum value and a minimum value of distances, said distance being that from each intersection point of a cylinder central axis which is a straight line connecting circle centers of two cross-sectional circles in both ends of the cylinder among cross-sectional circles whose circumferential shapes are calculated by said steps (i) to (vii) and said cross-sectional circles other than those in both ends of the cylinder, to a predetermined point on the circumference of each of said cross-sectional circle.

8. A measuring apparatus of a shape of a cylinder, comprising:

measuring means which is constructed of a cylinder support jig, and a mount which is provided reciprocably in parallel to a rotation axis of the cylinder and has four sensors for detecting displacements which are arranged and fixed in a shape formed by connecting a measurement reference point ($O_0$) and said four sensors being a fan shape, said measurement reference point ($O_0$) being an intersection point of the rotation axis of the cylinder and the cross-section orthogonal to the rotation axis, and are **characterized by** having two sensors SA and SB for detecting displacements are oriented to said measurement reference point ($O_0$), and are arranged with forming a predetermined angle ($\theta°$) with $O_0$ as a center, and two sensors SA' and SB' for detecting displacements which are arranged with forming the predetermined angle ($\theta°$) with $O_0$ as a center, and said four sensors are located on the same cross-section orthogonal to a rotation axis of the cylinder, and outside the cylinder; and calculation means configured for executing the following step (i):

(i) a step of measuring distances (L1 to L4) from the measurement reference point ($O_0$) on each detection axis to points on a circumference of the cross-sectional circle orthogonal to the axis of the cylinder by the sensors for detecting displacements, **characterized in that** the calculation means is configured for executing the following further steps:

(ii) a step of rotating the cylinder by the predetermined angle ($\theta°$) in a direction of a first sensor SA to a second sensor SB, and again measuring the distances from the measurement reference point ($O_0$) on each detection axis to the points on the circumference of the cross-sectional circle orthogonal to the axis of the cylinder by the sensors for detecting displacements,

(iii) a step of calculating a position of a floating center O' from the change of measurements by the sensors for detecting displacements of the cylinder before and after rotation by the predetermined angle ($\theta°$), wherein the floating center O' is a virtual center of the cross-sectional circle which may move by the rotating of the cylinder;

(iv) a step of calculating a distance ($O_0$ - O') on an axis of the sensor Sm for detecting a displacement and measuring new distances from O' on the axis of the sensor Sm for detecting a displacement to the points on the circumference of the cross-sectional circle orthogonal to the axis of the cylinder,

(v) a step of measuring n pieces of distances by repeating said steps (ii) to (iv),

(vi) a step of calculating a circumferential shape of the cross-sectional circle using the respective distances obtained,

(vii) a step of moving the mount in parallel to the rotation axis of the cylinder and calculating a circumferential shape of each of the cross-sectional circles by said steps (i) to (vi) about different cross-sectional circles of the cylinder,

(viii) a step of obtaining differences between a maximum value and a minimum value of distances, said distance being that from each intersection point of a cylinder central axis which is a straight line connecting circle centers of two cross-sectional circles in both ends of the cylinder among cross-sectional circles whose circumferential shapes are calculated by said steps (i) to (vii) and said cross-sectional circles other than those in both ends of the cylinder, to a predetermined point on the circumference of each of said cross-sectional circle.

## Patentansprüche

1. Messverfahren einer Form eines Querschnittskreises, der orthogonal zu einer Achse eines Zylinders ist, durch die folgenden Schritte (i) bis (vi) unter Verwendung einer Messeinrichtung, die aus einem Zylinderunterstützungsgestell und einer Montageeinheit konstruiert ist, die drei oder mehr Sensoren zum Erfassen von Verlagerungen aufweist, wobei die Sensoren auf demselben Querschnitt senkrecht zu einer Rotationsachse des Zylinders lokalisiert sind und außerhalb des Zylinders sind, orientiert an einem Messreferenzpunkt ($O_0$) sind, der ein Schnittpunkt der Rotationsachse des Zylinders und des Querschnitts senkrecht zu der Rotationsachse ist, und angeordnet und fixiert in einer Form sind, die durch Verbinden des Messreferenzpunkts ($O_0$) und der drei oder mehr Sensoren, die in einer Fächerform sind, wobei sie einen vorbestimmten Winkel ($\theta°$) zueinander mit ($O_0$) als einem Zentrum bilden, gebildet sind, wobei das Verfahren aufweist:

(i) einen Schritt des Messens von Abständen (L1 bis Lm) von dem Messreferenzpunkt ($O_0$) auf jeder Erfassungsachse zu Punkten auf einem Umfang des Querschnittskreises senkrecht zu der Achse des Zylinders durch die Sensoren (S1 bis Sm) zum Erfassen von m Sätzen von Verlagerungen, wobei m drei oder größer ist;

**dadurch gekennzeichnet, dass** es ferner die folgenden Schritte aufweist:

(ii) einen Schritt des Rotierens des Zylinders um einen vorbestimmten Winkel ($\theta°$) in einer Richtung eines ersten Sensors S1 zu einem zweiten Sensor S2, und eines nochmaligen Messens der Abstände von dem Messreferenzpunkt ($O_0$) auf jeder Erfassungsachse zu den Punkten auf dem Umfang des Querschnittskreises senkrecht zu der Achse des Zylinders durch die Sensoren zum Erfassen von Verlagerungen;

(iii) einen Schritt eines Berechnens einer Position eines Fließzentrums O' aus der Änderung der Messungen durch die Sensoren zum Erfassen von Verlagerungen des Zylinders vor und nach der Rotation um den vorbestimmten Winkel ($\theta°$), wobei das Fließzentrum O' ein virtuelles Zentrum des Querschnittskreises ist, das sich durch das Rotieren des Zylinders bewegen kann;

(iv) einen Schritt des Berechnens eines Abstands ($O_0$ - O') auf einer Achse des Sensors Sm zum Erfassen einer Verlagerung und des Messens von neuen Abständen von O' auf der Achse des Sensors Sm zum Erfassen einer Verlagerung zu den Punkten auf dem Umfang des Querschnittskreises, der orthogonal zu der Achse des Zylinders ist,

(v) einen Schritt des Messens von n Sätzen von Abständen durch Wiederholen der Schritte (ii) bis (iv), und

(vi) einen Schritt des Berechnens einer Umfangsform des Querschnittskreises unter Verwendung der jeweiligen erhaltenen Abstände.

2. Messverfahren einer Form eines Querschnittskreises, der senkrecht zu einer Achse eines Zylinders ist, durch die folgenden Schritte (i) bis (vi) unter Verwendung einer Messeinrichtung, die aus einem Zylinderunterstützungsgestell und einer Montageeinheit, die vier Sensoren zum Erfassen von Verlagerungen aufweist, konstruiert ist, wobei die Sensoren angebracht und in einer Form fixiert sind, die durch Verbinden eines Messreferenzpunkts ($O_0$) und den vier Sensoren, die in einer Fächerform sind, gebildet ist, wobei der Messreferenzpunkt ($O_0$) ein Schnittpunkt der Rotationsachse des Zylinders und des Querschnitts senkrecht zu der Rotationsachse ist, und die Sensoren **dadurch gekennzeichnet sind, dass** sie zwei Sensoren SA und SB zum Erfassen von Verlagerungen, die zu dem Messreferenzpunkt ($O_0$) orientiert sind, und angebracht sind, sodass sie einen vorbestimmten Winkel ($\theta°$) mit $O_0$ als einem Zentrum bilden, und zwei Sensoren SA' und SB' zum Erfassen von Verlagerungen aufweisen, die angebracht sind, wobei sie den vorbestimmten Winkel ($\theta°$) mit $O_0$ als einem Zentrum bilden, und diese vier Sensoren auf dem gleichen Querschnitt senkrecht zu einer Rotationsachse des Zylinders orientiert sind und außerhalb des Zylinders sind, wobei das Verfahren aufweist:

(i) einen Schritt des Messens von Abständen (L1 bis L4) von dem Messreferenzpunkt ($O_0$) auf jeder Erfassungsachse zu Punkten auf einem Umfang des Querschnittskreises senkrecht zu der Achse des Zylinders durch die Sensoren zum Erfassen von Verlagerungen,

**dadurch gekennzeichnet, dass** es ferner die folgenden Schritte aufweist:

(ii) einen Schritt des Rotierens des Zylinders um den vorbestimmten Winkel ($\theta°$) in einer Richtung eines ersten Sensors SA zu einem zweiten Sensor SB, und eines nochmaligen Messens der Abstände von dem Messreferenzpunkt ($O_0$) auf jeder Erfassungsachse zu den Punkten auf dem Umfang des Querschnittskreises senkrecht zu der Achse des Zylinders durch die Sensoren zum Erfassen von Verlagerungen;

(iii) einen Schritt des Berechnens einer Position eines Fließzentrums O' aus der Änderung von Messungen durch die Sensoren zum Erfassen von Verlagerungen des Zylinders vor und nach einer Rotation um den vorbestimmten Winkel ($\theta°$), wobei das Fließzentrum O' ein virtuelles Zentrum des Querschnittskreises ist, das sich durch die Rotation des Zylinders bewegen kann;

(iv) einen Schritt des Berechnens eines Abstands ($O_0$ - O') auf einer Achse des Sensors Sm zum Erfassen einer Verlagerung und des Messens von neuen Abständen von O' auf der Achse des Sensors Sm zum Erfassen einer Verlagerung zu den Punkten auf dem Umfang des Querschnittskreises, der senkrecht zu der Achse des Zylinders ist,

(v) einen Schritt des Messens von n Sätzen von Abständen durch Wiederholen der Schritte (ii) bis (iv), und

(vi) einen Schritt des Berechnens einer Umfangsform des Querschnittskreises unter Verwendung der jeweiligen erhaltenen Abstände.

3. Messverfahren nach Anspruch 1, angewendet um eine Zylindrizität des Zylinders zu erhalten, wobei die folgenden Schritte (vii) und (viii) zusätzlich zu Schritten (i) bis (vi) durchgeführt werden:

(vii) einen Schritt des Bewegens der Montageeinheit parallel zu der Rotationsachse des Zylinders und des Berechnens einer Umfangsform von jedem der Querschnittskreise von verschiedenen Querschnittskreisen des Zylinders durch die Schritte (i) bis (vi),

(viii) einen Schritt des Erhaltens von Differenzen zwischen einem Maximalwert und einem Minimalwert von Abständen, wobei der Abstand der von jedem Schnittpunkt einer Zylinderzentralachse, die eine gerade Linie ist, die die Kreismittelpunkte von zwei Querschnittskreisen an beiden Enden des Zylinders unter den Querschnittskreisen verbindet, deren Umfangsformen durch die Schritte (i) bis (vii) berechnet werden, und den Querschnittskreisen, die verschieden von denen an beiden Enden des Zylinders sind, zu einem vorbestimmten Punkt auf dem Umfang von jedem der Querschnittskreise ist.

4. Messverfahren nach Anspruch 2, angewendet um eine Zylindrizität des Zylinders zu erhalten, wobei die folgenden Schritte (vii) und (viii) zusätzlich zu Schritten (i) bis (vi) durchgeführt werden:

(vii) einen Schritt des Bewegens der Montageeinheit parallel zu der Rotationsachse des Zylinders und des Berechnens einer Umfangsform von jedem der Querschnittskreise von verschiedenen Querschnittskreisen des Zylinders durch die Schritte (i) bis (vi),

(viii) einen Schritt des Erhaltens von Differenzen zwischen einem Maximalwert und einem Minimalwert von Abständen, wobei der Abstand der von jedem Schnittpunkt einer Zylinderzentralachse, die eine gerade Linie, die Kreismittelpunkte von zwei Querschnittskreisen an beiden Enden des Zylinders unter den Querschnittskreisen, deren Umfangsformen durch die Schritte (i) bis (vii) berechnet werden, verbindet, und den Querschnittskreisen, die verschieden von denen an beiden Enden des Zylinders sind, zu einem vorbestimmten Punkt auf dem Umfang von jedem der Querschnittskreise ist.

5. Messverfahren einer Zylinderform eines Zylinders nach Anspruch 3 oder 4, wobei ein Sensor zum Erfassen einer Verlagerung innerhalb des Zylinders angeordnet ist, um eine Wanddicke, einen Kreismittelpunkt eines inneren Umfangkreises und eine Rundheit des Zylinders zu erhalten.

6. Messverfahren einer Zylinderform eines zusammengesetzten Zylinders, der die Schritte des Messens von zumindest einem Zylinder, der den zusammengesetzten Zylinder konstituiert, durch das Verfahren der Ansprüche 3 oder 5 enthält, wobei der zusammengesetzte Zylinder aus einer Vielzahl von Zylindern konstituiert ist, deren Durchmesser verschieden sind, und eine Rotationsachse in äußeren Umfangskreisen von all den Zylinder gemeinsam hat, einen Schritt des Messens der zylindrischen Formen der Zylinder, die verschieden von dem einen Zylinder sind, unter Verwendung von zumindest einem jeweiligen Sensor zum Erfassen einer Verlagerung, und Erhalten von allen zylindrischen Formen, Konzentrizitäten und Wanddicken des zusammengesetzten Zylinders.

7. Messvorrichtung einer Form eines Querschnittskreises, die aufweist:

eine Messeinrichtung, die aus einem Zylinderunterstützungsgestell und eine Montageeinheit, die wechselseitig parallel zu einer Rotationsachse des Zylinders konstruiert ist, die drei oder mehr Sensoren zum Erfassen von Verlagerungen aufweist, wobei die Sensoren auf demselben Querschnitt senkrecht zu der Rotationsachse des Zylinders lokalisiert sind und außerhalb des Zylinders sind, orientiert an einem Messreferenzpunkt ($O_0$) sind, der ein Schnittpunkt der Rotationsachse des Zylinders und des Querschnitts senkrecht zu der Rotationsachse ist, und angeordnet und fixiert in einer Form sind, die durch Verbinden des Messreferenzpunkts ($O_0$) und den drei oder mehr Sensoren, die in einer Fächerform sind, gebildet sind, wobei sie einen vorbestimmten Winkel ($\theta°$) zueinander mit ($O_0$) als einem Zentrum bilden, das aufweist:

(i) einen Schritt des Messens von Abständen (L1 bis Lm) von einem Messreferenzpunkt ($O_0$) auf jeder Erfassungsachse zu Punkten auf einem Umfang des Querschnittskreises senkrecht zu der Achse des Zylinders durch die Sensoren (S1 bis Sm) zum Erfassen von m Sätzen von Verlagerungen, wobei m drei oder größer ist;

**dadurch gekennzeichnet, dass** es ferner die folgenden Schritte aufweist:

(ii) einen Schritt des Rotierens des Zylinders um einen vorbestimmten Winkel ($\theta°$) in einer Richtung eines ersten Sensors S1 zu einem zweiten Sensor S2, und eines nochmaligen Messens der Abstände von dem Messreferenzpunkt ($O_0$) auf jeder Erfassungsachse zu den Punkten auf dem Umfang des Querschnittskreises senkrecht zu der Achse des Zylinders durch die Sensoren zum Erfassen von Verlagerungen;

(iii) einen Schritt eines Berechnens einer Position eines Fließzentrums O' aus der Änderung der Messungen durch die Sensoren zum Erfassen von Verlagerungen des Zylinders vor und nach der Rotation um den vorbestimmten Winkel ($\theta°$), wobei das Fließzentrum O' ein virtuelles Zentrum des Querschnittskreises ist, das sich durch das Rotieren des Zylinders bewegen kann;

(iv) einen Schritt des Berechnens eines Abstands ($O_0$ - O') auf einer Achse des Sensors Sm zum Erfassen einer Verlagerung und des Messens von neuen Abständen von O' auf der Achse des Sensors Sm zum Erfassen einer Verlagerung zu den Punkten auf dem Umfang des Querschnittskreises, der orthogonal zu der Achse des Zylinders ist,

(v) einen Schritt des Messens von n Sätzen von Abständen durch Wiederholen der Schritte (ii) bis (iv),

(vi) einen Schritt des Berechnens einer Umfangsform des Querschnittskreises unter Verwendung der jeweiligen erhaltenen Abstände,

(vii) einen Schritt des Bewegens der Montageeinheit parallel zu der Rotationsachse des Zylinders und des Berechnens einer Umfangsform von jedem der Querschnittskreise von verschiedenen Querschnittskreisen des Zylinders durch die Schritte (i) bis (vi),

(viii) einen Schritt des Erhaltens von Differenzen zwischen einem Maximalwert und einem Minimalwert von Abständen, wobei der Abstand der von jedem Schnittpunkt einer Zylinderzentralachse, die eine gerade Linie ist, die die Kreismittelpunkte von zwei Querschnittskreisen an beiden Enden des Zylinders unter den Querschnittskreisen verbindet, deren Umfangsformen durch die Schritte (i) bis (vii) berechnet werden, und den Querschnittskreisen, die verschieden von denen an beiden Enden des Zylinders sind, zu einem vorbestimmten Punkt auf dem Umfang von jedem der Querschnittskreise ist.

8. Messvorrichtung einer Form eines Querschnittskreises, die aufweist:

eine Messeinrichtung, die aus einem Zylinderunterstützungsgestell und eine Montageeinheit, die wechselseitig parallel zu einer Rotationsachse des Zylinders konstruiert ist, die vier Sensoren zum Erfassen von Verlagerungen aufweist, , die angebracht und in einer Form fixiert sind, die durch Verbinden eines Messreferenzpunkts ($O_0$) und den vier Sensoren, die eine Fächerform sind, gebildet ist, wobei der Messreferenzpunkt ($O_0$) ein Schnittpunkt der Rotationsachse des Zylinders und des Querschnitts senkrecht zu der Rotationsachse ist, und **dadurch gekennzeichnet sind, dass** sie zwei Sensoren SA und SB zum Erfassen von Verlagerungen, die zu dem Messreferenzpunkt ($O_0$) orientiert sind, und angebracht sind, sodass sie einen vorbestimmten Winkel ($\theta°$) mit $O_0$ als einem Zentrum bilden, und zwei Sensoren SA' und SB' zum Erfassen von Verlagerungen aufweisen, die angebracht sind, wobei sie den vorbestimmten Winkel ($\theta°$) mit $O_0$ als einem Zentrum bilden, und diese vier Sensoren auf dem gleichen Querschnitt senkrecht zu einer Rotationsachse des Zylinders orientiert sind und außerhalb des Zylinders sind, wobei das Verfahren aufweist:

(i) einen Schritt des Messens von Abständen (L1 bis L4) von dem Messreferenzpunkt ($O_0$) auf jeder Erfassungsachse zu Punkten auf einem Umfangs des Querschnittskreises senkrecht zu der Achse des Zylinders durch die Sensoren zum Erfassen von Verlagerungen,

**dadurch gekennzeichnet, dass** es ferner die folgenden Schritte aufweist:

(ii) einen Schritt des Rotierens des Zylinders um den vorbestimmten Winkel ($\theta°$) in einer Richtung eines ersten Sensors SA zu einem zweiten Sensor SB, und eines nochmaligen Messens der Abstände von dem Messreferenzpunkt ($O_0$) auf jeder Erfassungsachse zu den Punkten auf dem Umfang des Querschnittskreises senkrecht zu der Achse des Zylinders durch die Sensoren zum Erfassen von Verlagerungen;

(iii) einen Schritt des Berechnens einer Position eines Fließzentrums O' aus der Änderung von Messungen durch die Sensoren zum Erfassen von Verlagerungen des Zylinders vor und nach einer Rotation um den vorbestimmten Winkel ($\theta°$), wobei das Fließzentrum O' ein virtuelles Zentrum des Querschnittskreises ist, das sich durch die Rotation des Zylinders bewegen kann;

(iv) einen Schritt des Berechnens eines Abstands ($O_0$ - O') auf einer Achse des Sensors Sm zum Erfassen einer Verlagerung und des Messens von neuen Abständen von O' auf der Achse des Sensors Sm zum Erfassen einer Verlagerung zu den Punkten auf dem Umfang des Querschnittskreises, der senkrecht zu der Achse des Zylinders ist,

(v) einen Schritt des Messens von n Sätzen von Abständen durch Wiederholen der Schritte (ii) bis (iv),

(vi) einen Schritt des Berechnens einer Umfangsform des Querschnittskreises unter Verwendung der jeweiligen erhaltenen Abstände,

(vii) einen Schritt des Bewegens der Montageeinheit parallel zu der Rotationsachse des Zylinders und des Berechnens einer Umfangsform von jedem der Querschnittskreise von verschiedenen Querschnittskreisen des Zylinders durch die Schritte (i) bis (vi),

(viii) einen Schritt des Erhaltens von Differenzen zwischen einem Maximalwert und einem Minimalwert von Abständen, wobei der Abstand der von jedem Schnittpunkt einer Zylinderzentralachse, die eine gerade Linie, die die Kreismittelpunkte von zwei Querschnittskreisen an beiden Enden des Zylinders unter den Querschnittskreisen, deren Umfangsformen durch die Schritte (i) bis (vii) berechnet werden, verbindet, und den Querschnittskreisen, die verschieden von denen an beiden Enden des Zylinders sind, zu einem vorbestimmten Punkt auf dem Umfang von jedem der Querschnittskreise ist.

**Revendications**

1. Procédé de mesure d'une forme de cercle de section transversale, orthogonal à un axe d'un cylindre, comprenant les étapes suivantes (i) à (vi) en utilisant un moyen de mesure qui est composé d'un gabarit de support cylindrique, et d'un montant qui possède trois ou plus de trois capteurs pour détecter les déplacements qui sont localisés sur la même section transversale orthogonale à un axe de rotation du cylindre, et en dehors du cylindre, sont orientés vers un point de référence de mesure ($O_0$) qui correspond à un point d'intersection de l'axe de rotation du cylindre, et de la section transversale orthogonale à l'axe de rotation, et sont agencés et fixés selon une configuration formée en reliant ledit point de référence de mesure ($O_0$) et lesdits trois ou plus de trois capteurs sous forme de ventilateur en formant un angle prédéterminé ($\theta°$) mutuellement avec $O_0$ comme centre, comprenant :

   (i) une étape de mesure des distances (L1 à Lm) entre le point de référence de mesure ($O_0$) sur chaque axe de détection et les points situés sur une circonférence du cercle de section transversale orthogonal à l'axe du cylindre par les capteurs (S1 à Sm) utilisés pour détecter m déplacements, où m est égale à trois ou plus ;

   **caractérisé en ce qu'**il comprend en outre les étapes suivantes :

   (ii) une étape de rotation du cylindre de l'angle prédéterminé ($\theta°$) dans un sens allant d'un premier capteur S1 à un second capteur S2, puis de nouvelle mesure des distances entre le point de référence de mesure ($O_0$) sur chaque axe de détection et les points situés sur la circonférence du cercle de section transversale orthogonal à l'axe du cylindre par les capteurs utilisés pour détecter les déplacements,
   (iii) une étape de calcul d'une position d'un centre flottant O' à partir du changement de mesures par les capteurs utilisés pour détecter les déplacements du cylindre avant et après la rotation de l'angle prédéterminé ($\theta°$), le centre flottant O' étant un centre virtuel du cercle de section transversale qui peut se déplacer sous l'effet de la rotation du cylindre ;
   (iv) une étape de calcul d'une distance ($O_0$ - O') sur un axe du capteur Sm utilisé pour détecter un déplacement et de mesure de nouvelles distances entre O' sur l'axe du capteur Sm utilisé pour détecter un déplacement et les points situés sur la circonférence du cercle de section transversale orthogonal à l'axe du cylindre,
   (v) une étape de mesure de n distances en répétant lesdites étapes (ii) à (iv), et
   (vi) une étape de calcul d'une forme circonférentielle du cercle de section transversale en utilisant les distances respectives obtenues.

2. Procédé de mesure d'une forme de cercle de section transversale, orthogonal à un axe de cylindre, comprenant les étapes suivantes (i) à (vi) en utilisant un moyen de mesure qui est composé d'un gabarit de support cylindrique, et d'un montant qui possède quatre capteurs pour détecter les déplacements qui sont agencés et fixés selon une configuration formée en reliant un point de référence de mesure ($O_0$) et lesdits quatre capteurs sous forme de ventilateur, ledit point de référence de mesure ($O_0$) correspondant à un point d'intersection de l'axe de rotation du cylindre et de la section transversale orthogonale à l'axe de rotation, et sont **caractérisés par** le fait de posséder deux capteurs SA et SB pour détecter les déplacements, sont orientés vers ledit point de référence de mesure ($O_0$), et sont agencés pour former un angle prédéterminé ($\theta°$) avec $O_0$ comme centre, et deux capteurs SA' et SB' pour détecter les déplacements qui sont agencés pour former un angle prédéterminé ($\theta°$) avec $O_0$ comme centre, et lesdits quatre capteurs sont localisés sur la même section transversale orthogonale à un axe de rotation du cylindre, et en dehors du cylindre, comprenant :

   (i) une étape de mesure des distances (L1 à L4) entre le point de référence de mesure ($O_0$) sur chaque axe de détection et les points situés sur une circonférence du cercle de section transversale orthogonal à l'axe du cylindre par les capteurs utilisés pour détecter les déplacements,

   **caractérisé en ce qu'**il comprend en outre les étapes suivantes :

   (ii) une étape de rotation du cylindre de l'angle prédéterminé ($\theta°$) dans un sens allant d'un premier capteur SA à un second capteur SB, puis de nouvelle mesure des distances entre le point de référence de mesure ($O_0$) sur chaque axe de détection et les points situés sur la circonférence du cercle de section transversale orthogonal à l'axe du cylindre par les capteurs utilisés pour détecter les déplacements,

(iii) une étape de calcul d'une position d'un centre flottant O' à partir du changement de mesures par les capteurs utilisés pour détecter les déplacements du cylindre avant et après la rotation de l'angle prédéterminé ($\theta°$), le centre flottant O' étant un centre virtuel du cercle de section transversale qui peut se déplacer sous l'effet de la rotation du cylindre ;

(iv) une étape de calcul d'une distance ($O_0$ - O') sur un axe du capteur Sm utilisé pour détecter un déplacement et de mesure de nouvelles distances entre O' sur l'axe du capteur Sm utilisé pour détecter un déplacement et les points situés sur la circonférence du cercle de section transversale orthogonal à l'axe du cylindre,

(v) une étape de mesure de n distances en répétant lesdites étapes (ii) à (iv), et

(vi) une étape de calcul d'une forme circonférentielle du cercle de section transversale en utilisant les distances respectives obtenues.

3. Procédé de mesure selon la revendication 1, appliqué pour obtenir une cylindricité du cylindre, dans lequel les étapes suivantes (vii) et (viii) sont exécutées en plus des étapes (i) à (vi) :

(vii) une étape de déplacement du montant parallèlement à l'axe de rotation du cylindre et de calcul d'une forme circonférentielle de chacun des cercles de section transversale grâce auxdites étapes (i) à (vi) concernant les différents cercles de section transversale du cylindre,

(viii) une étape d'obtention des différences entre une valeur maximale et une valeur minimale des distances, ladite distance étant celle allant de chaque point d'intersection d'un axe central de cylindre qui forme une ligne droite reliant les centres de cercle de deux cercles de section transversale aux deux extrémités du cylindre parmi les cercles de section transversale dont les formes circonférentielles sont calculées grâce auxdites étapes (i) à (vii) et lesdits cercles de section transversale autres que ceux aux deux extrémités du cylindre, à un point prédéterminé sur la circonférence de chacun desdits cercles de section transversale.

4. Procédé de mesure selon la revendication 2, appliqué pour obtenir une cylindricité du cylindre, dans lequel les étapes suivantes (vii) et (viii) sont exécutées en plus des étapes (i) à (vi) :

(vii) une étape de déplacement du montant parallèlement à l'axe de rotation du cylindre et de calcul d'une forme circonférentielle de chacun des cercles de section transversale grâce auxdites étapes (i) à (vi) concernant les différents cercles de section transversale du cylindre,

(viii) une étape d'obtention des différences entre une valeur maximale et une valeur minimale des distances, ladite distance étant celle allant de chaque point d'intersection d'un axe central de cylindre qui forme une ligne droite reliant les centres de cercle de deux cercles de section transversale aux deux extrémités du cylindre parmi les cercles de section transversale dont les formes circonférentielles sont calculées grâce auxdites étapes (i) à (vii) et lesdits cercles de section transversale autres que ceux aux deux extrémités du cylindre, à un point prédéterminé sur la circonférence de chacun desdits cercles de section transversale.

5. Procédé de mesure d'une forme cylindrique d'un cylindre selon la revendication 3 ou 4, dans lequel un capteur pour détecter un déplacement est agencé à l'intérieur du cylindre pour obtenir une épaisseur de paroi, un centre de cercle d'un cercle circonférentiel interne, et un arrondi du cylindre.

6. Procédé de mesure d'une forme cylindrique d'un cylindre composite, comprenant les étapes de mesure d'au moins un cylindre, qui constitue le cylindre composite, selon la méthode de la revendication 3 ou 5, pour le cylindre composite qui est composé d'une pluralité de cylindres dont les diamètres sont différents, et partage un axe de rotation dans les cercles circonférentiels externes de tous les cylindres, de mesure des formes cylindriques des cylindres autres que le cylindre utilisant au moins un capteur pour détecter un déplacement respectivement, et d'obtention de toutes les formes cylindriques, des concentricités, et des épaisseurs de paroi du cylindre composite.

7. Appareil de mesure d'une forme de cylindre, comprenant un moyen de mesure qui est composé d'un gabarit de support cylindrique et d'un montant installé de manière réciproque parallèlement à un axe de rotation du cylindre et qui possède trois ou plus de trois capteurs pour détecter les déplacements qui sont localisés sur la même section transversale orthogonale à l'axe de rotation du cylindre et, en dehors du cylindre, sont orientés vers un point de référence de mesure ($O_0$) correspondant à un point d'intersection de l'axe de rotation du cylindre et de la section transversale orthogonale à l'axe de rotation, et sont agencés et fixés selon une configuration formée en reliant ledit point de référence de mesure ($O_0$) et lesdits trois ou plus de trois capteurs sous forme de ventilateur en formant un angle prédéterminé ($\theta°$) mutuellement avec $O_0$ comme centre, et un moyen de calcul configuré pour exécuter l'étape (i) suivante :

(i) une étape de mesure des distances (L1 à Lm) entre un point de référence de mesure ($O_0$) sur chaque axe de détection et les points situés sur la circonférence du cercle de section transversale orthogonal à l'axe du cylindre par les capteurs (S1 à Sm) utilisés pour détecter m déplacements, m étant égale à trois ou plus ;

**caractérisé en ce que** le moyen de calcul est configuré pour exécuter les étapes supplémentaires suivantes :

(ii) une étape de rotation du cylindre de l'angle prédéterminé ($\theta°$) dans un sens allant d'un premier capteur S1 à un second capteur S2, puis de nouvelle mesure des distances entre le point de référence de mesure ($O_0$) sur chaque axe de détection et les points situés sur la circonférence du cercle de section transversale orthogonal à l'axe du cylindre par les capteurs utilisés pour détecter les déplacements,

(iii) une étape de calcul d'une position d'un centre flottant O' à partir du changement de mesures par les capteurs utilisés pour détecter les déplacements du cylindre avant et après la rotation de l'angle prédéterminé ($\theta°$), le centre flottant O' étant un centre virtuel du cercle de section transversale qui peut se déplacer sous l'effet de la rotation du cylindre ;

(iv) une étape de calcul d'une distance ($O_0$ - O') sur un axe du capteur Sm utilisé pour détecter un déplacement et de mesure de nouvelles distances entre O' sur l'axe du capteur Sm utilisé pour détecter un déplacement et les points situés sur la circonférence du cercle de section transversale orthogonal à l'axe du cylindre,

(v) une étape de mesure de n distances en répétant lesdites étapes (ii) à (iv),

(vi) une étape de calcul d'une forme circonférentielle du cercle de section transversale en utilisant les distances respectives obtenues,

(vii) une étape de déplacement du montant parallèlement à l'axe de rotation du cylindre et de calcul d'une forme circonférentielle de chacun des cercles de section transversale grâce auxdites étapes (i) à (vi) concernant les différents cercles de section transversale du cylindre,

(viii) une étape d'obtention des différences entre une valeur maximale et une valeur minimale des distances, ladite distance étant celle allant de chaque point d'intersection d'un axe central de cylindre qui forme une ligne droite reliant les centres de cercle de deux cercles de section transversale aux deux extrémités du cylindre parmi les cercles de section transversale dont les formes circonférentielles sont calculées grâce auxdites étapes (i) à (vii) et lesdits cercles de section transversale autres que ceux aux deux extrémités du cylindre, à un point prédéterminé sur la circonférence de chacun desdits cercles de section transversale.

8. Appareil de mesure d'une forme de cylindre, comprenant :

un moyen de mesure qui est composé d'un gabarit de support cylindrique, et d'un montant installé de manière réciproque parallèlement à un axe de rotation du cylindre et qui possède quatre capteurs pour détecter les déplacements qui sont agencés et fixés selon une configuration formée en reliant un point de référence de mesure ($O_0$) et lesdits quatre capteurs sous forme de ventilateur, ledit point de référence de mesure ($O_0$) correspondant à un point d'intersection de l'axe de rotation du cylindre et de la section transversale orthogonale à l'axe de rotation, et sont **caractérisés par** le fait de posséder deux capteurs SA et SB pour détecter les déplacements, sont orientés vers ledit point de référence de mesure ($O_0$), et sont agencés pour former un angle prédéterminé ($\theta°$) avec $O_0$ comme centre, et deux capteurs SA' et SB' pour détecter les déplacements qui sont agencés pour former l'angle prédéterminé ($\theta°$) avec $O_0$ comme centre, et lesdits quatre capteurs sont localisés sur la même section transversale orthogonale à un axe de rotation du cylindre et, en dehors du cylindre ; et un moyen de calcul configuré pour exécuter l'étape (i) suivante :

(i) une étape de mesure des distances (L1 à L4) entre un point de référence de mesure ($O_0$) sur chaque axe de détection et les points situés sur une circonférence du cercle de section transversale orthogonal à l'axe du cylindre par les capteurs utilisés pour détecter les déplacements,

**caractérisé en ce que** le moyen de calcul est configuré pour exécuter les étapes supplémentaires suivantes :

(ii) une étape de rotation du cylindre de l'angle prédéterminé ($\theta°$) dans un sens allant d'un premier capteur SA à un second capteur SB, puis de nouvelle mesure des distances entre le point de référence de mesure ($O_0$) sur chaque axe de détection et les points situés sur la circonférence du cercle de section transversale orthogonal à l'axe du cylindre par les capteurs utilisés pour détecter les déplacements,

(iii) une étape de calcul d'une position d'un centre flottant O' à partir du changement de mesures par les capteurs utilisés pour détecter les déplacements du cylindre avant et après la rotation de l'angle prédéterminé ($\theta°$), le centre flottant O' étant un centre virtuel du cercle de section transversale qui peut se déplacer sous l'effet de la rotation du cylindre ;

(iv) une étape de calcul d'une distance ($O_0$ - O') sur un axe du capteur Sm utilisé pour détecter un déplacement et de mesure de nouvelles distances entre O' sur l'axe du capteur Sm utilisé pour détecter un déplacement et les points situés sur la circonférence du cercle de section transversale orthogonal à l'axe du cylindre,

(v) une étape de mesure de n distances en répétant lesdites étapes (ii) à (iv),

(vi) une étape de calcul d'une forme circonférentielle du cercle de section transversale en utilisant les distances respectives obtenues,

(vii) une étape de déplacement du montant parallèlement à l'axe de rotation du cylindre et de calcul d'une forme circonférentielle de chacun des cercles de section transversale grâce auxdites étapes (i) à (vi) concernant les différents cercles de section transversale du cylindre,

(viii) une étape d'obtention des différences entre une valeur maximale et une valeur minimale des distances, ladite distance étant celle allant de chaque point d'intersection d'un axe central de cylindre qui forme une ligne droite reliant les centres de cercle de deux cercles de section transversale aux deux extrémités du cylindre parmi les cercles de section transversale dont les formes circonférentielles sont calculées grâce auxdites étapes (i) à (vii) et lesdits cercles de section transversale autres que ceux aux deux extrémités du cylindre, à un point prédéterminé sur la circonférence de chacun desdits cercles de section transversale.

# FIG. 1

③ → START

**MEASURE DISTANCE FROM $O_0$ ON EACH DETECTION AXIS TO CIRCUMFERENCE WITH m PIECES OF DISPLACEMENT SENSORS TO OBTAIN L1 TO Lm**

① →

**ROTATE MEASURED CYLINDER BY $\theta°$ FROM S1 TOWARD S2**

**MEASURE DISTANCE FROM $O_0$ ON EACH DETECTION AXIS TO CIRCUMFERENCE WITH THE DISPLACEMENT SENSORS AGAIN**

**CALCULATE POSITION OF O' FROM CHANGE OF MEASURED VALUES OF EACH DISPLACEMENT SENSOR BEFORE AND AFTER $\theta°$ ROTATION OF THE MEASURED CYLINDER**

**CALCULATE DISTANCE OF $O_0$-O' ON AXIS OF DISPLACEMENT SENSOR Sm**

**CALCULATE DISTANCE FROM O' ON THE AXIS OF DISPLACEMENT SENSOR Sm TO CIRCUMFERENCE TO OBTAIN NEW DISTANCE L**

① ← NO — **IS Ln OBTAINED?** — YES → ②

② 

**OBTAIN CIRCLE CENTRAL POSITION AND ROUNDNESS BY LEAST-SQUARE CENTER METHOD USING EACH DISTANCE L OBTAINED**

YES ← **IS MEASUREMENT POSITION PI?** — NO

**MOVE DISPLACEMENT SENSOR MOUNT TO NEXT MEASUREMENT POSITION IN PARALLEL TO ROTATION CENTRAL AXIS OF THE MEASURED CYLINDER**

③

**USE STRAIGHT LINE, CONNECTING BOTH CIRCLE CENTERS OF TWO CROSS-SECTIONAL CIRCLES OF BOTH ENDS OF THE CYLINDER AMONG RESPECTIVE CROSS-SECTIONAL CIRCLES MEASURED AS CYLINDRICAL CENTRAL AXIS OF THE MEASURED CYLINDER**

**CALCULATE DISTANCE FROM INTERSECTIONS OF ALL MEASURED CROSS-SECTIONAL CIRCLES AND ROTATION CENTRAL AXIS OF THE MEASURED CYLINDER TO ALL MEASURED POINTS TO OBTAIN DIFFERENCE BETWEEN THEIR MAXIMUM AND MINIMUM VALUES AND TO OBTAIN ROUNDNESS OF THE MEASURED CYLINDER**

END

O': A POINT THAT MOVES AS THE MEASURED CYLINDER ROTATES WITH $O_0$ AS STARTING POINT, AND THAT DISTANCE FROM ALL POINTS ON CIRCUMFERENCE NEVER CHANGES

23

# FIG. 2

# FIG. 3

# FIG. 4

# FIG. 5

# FIG. 6

# FIG. 7

# FIG. 8

# FIG. 9

| SAMPLE 1 | S0 | S45 | S90 | Δx | Δy | TRUE VALUE | X COORDINATE | Y COORDINATE |
|---|---|---|---|---|---|---|---|---|
| 0 | 83.936 | 83.901 | 83.909 | | | | 0.000 | 83.936 |
| 45 | 83.920 | 83.908 | 83.927 | 0.026 | -0.066 | 83.986 | -59.387 | 59.387 |
| 90 | 83.911 | 83.911 | 83.933 | -0.003 | -0.102 | 84.013 | -84.013 | 0.000 |
| 135 | 83.932 | 83.888 | 83.917 | -0.069 | -0.109 | 84.041 | -59.426 | -59.426 |
| 180 | 83.935 | 83.913 | 83.911 | -0.102 | -0.078 | 84.013 | 0.000 | -84.013 |
| 225 | 83.923 | 83.911 | 83.930 | -0.111 | -0.034 | 83.957 | 59.366 | -59.366 |
| 270 | 83.930 | 83.910 | 83.926 | -0.087 | 0.021 | 83.909 | 83.909 | 0.000 |
| 315 | 83.930 | 83.915 | 83.923 | -0.034 | 0.042 | 83.888 | 59.317 | 59.317 |

X COORDINATE OF CENTER: -0.058  Y COORDINATE OF CENTER: -0.041

| SAMPLE 2 | S0 | S45 | S90 | Δx | Δy | TRUE VALUE | X COORDINATE | Y COORDINATE |
|---|---|---|---|---|---|---|---|---|
| 0 | 83.926 | 83.914 | 83.943 | | | | 0.000 | 83.926 |
| 45 | 83.944 | 83.915 | 83.924 | 0.010 | -0.026 | 83.970 | -59.375 | 59.375 |
| 90 | 83.954 | 83.919 | 83.916 | -0.010 | -0.061 | 84.015 | -84.015 | 0.000 |
| 135 | 83.933 | 83.925 | 83.934 | -0.036 | -0.092 | 84.025 | -59.415 | -59.415 |
| 180 | 83.926 | 83.918 | 83.943 | -0.072 | -0.079 | 84.005 | 0.000 | -84.005 |
| 225 | 83.943 | 83.909 | 83.923 | -0.102 | -0.034 | 83.977 | 59.381 | -59.381 |
| 270 | 83.940 | 83.910 | 83.920 | -0.085 | -0.009 | 83.949 | 83.949 | 0.000 |
| 315 | 83.939 | 83.908 | 83.918 | -0.059 | 0.001 | 83.938 | 59.353 | 59.353 |

X COORDINATE OF CENTER: -0.031  Y COORDINATE OF CENTER: -0.037

| SAMPLE 3 | S0 | S45 | S90 | Δx | Δy | TRUE VALUE | X COORDINATE | Y COORDINATE |
|---|---|---|---|---|---|---|---|---|
| 0 | 83.924 | 83.926 | 83.935 | | | | 0.000 | 83.924 |
| 45 | 83.929 | 83.922 | 83.935 | 0.009 | -0.012 | 83.941 | -59.355 | 59.355 |
| 90 | 83.909 | 83.923 | 83.952 | 0.028 | -0.053 | 83.962 | -83.962 | 0.000 |
| 135 | 83.908 | 83.926 | 83.955 | 0.014 | -0.065 | 83.973 | -59.378 | -59.378 |
| 180 | 83.925 | 83.907 | 83.936 | -0.026 | -0.068 | 83.993 | 0.000 | -83.993 |
| 225 | 83.925 | 83.928 | 83.936 | -0.037 | -0.054 | 83.979 | 59.382 | -59.382 |
| 270 | 83.920 | 83.925 | 83.936 | -0.057 | -0.020 | 83.940 | 83.940 | 0.000 |
| 315 | 83.919 | 83.923 | 83.930 | -0.049 | 0.025 | 83.894 | 59.322 | 59.322 |

X COORDINATE OF CENTER: -0.013  Y COORDINATE OF CENTER: -0.038

| SAMPLE 4 | S0 | S45 | S90 | Δx | Δy | TRUE VALUE | X COORDINATE | Y COORDINATE |
|---|---|---|---|---|---|---|---|---|
| 0 | 83.915 | 83.893 | 83.915 | | | | 0.000 | 83.915 |
| 45 | 83.927 | 83.899 | 83.905 | 0.012 | -0.035 | 83.962 | -59.370 | 59.370 |
| 90 | 83.923 | 83.901 | 83.907 | -0.008 | -0.078 | 84.001 | -84.001 | 0.000 |
| 135 | 83.911 | 83.900 | 83.919 | -0.043 | -0.100 | 84.011 | -59.405 | -59.405 |
| 180 | 83.915 | 83.897 | 83.916 | -0.085 | -0.076 | 83.991 | 0.000 | -83.991 |
| 225 | 83.927 | 83.894 | 83.905 | -0.106 | -0.032 | 83.959 | 59.368 | -59.368 |
| 270 | 83.925 | 83.899 | 83.904 | -0.087 | 0.003 | 83.922 | 83.922 | 0.000 |
| 315 | 83.924 | 83.895 | 83.901 | -0.058 | 0.019 | 83.905 | 59.330 | 59.330 |

X COORDINATE OF CENTER: -0.039  Y COORDINATE OF CENTER: -0.037

| SAMPLE 5 | S0 | S45 | S90 | Δx | Δy | TRUE VALUE | X COORDINATE | Y COORDINATE |
|---|---|---|---|---|---|---|---|---|
| 0 | 83.931 | 83.905 | 83.920 | | | | 0.000 | 83.931 |
| 45 | 83.945 | 83.886 | 83.907 | 0.002 | -0.066 | 84.011 | -59.404 | 59.404 |
| 90 | 83.942 | 83.905 | 83.909 | -0.022 | -0.127 | 84.069 | -84.069 | 0.000 |
| 135 | 83.930 | 83.907 | 83.924 | -0.087 | -0.143 | 84.073 | -59.449 | -59.449 |
| 180 | 83.930 | 83.883 | 83.921 | -0.148 | -0.120 | 84.050 | 0.000 | -84.050 |
| 225 | 83.926 | 83.906 | 83.908 | -0.185 | -0.039 | 83.965 | 59.372 | -59.372 |
| 270 | 83.923 | 83.905 | 83.920 | -0.130 | 0.045 | 83.878 | 83.878 | 0.000 |
| 315 | 83.922 | 83.904 | 83.923 | -0.042 | 0.079 | 83.843 | 59.286 | 59.286 |

X COORDINATE OF CENTER: -0.097  Y COORDINATE OF CENTER: -0.063

# FIG. 10

| SAMPLE 6 | S0 | S45 | S90 | Δx | Δy | TRUE VALUE | X COORDINATE | Y COORDINATE |
|---|---|---|---|---|---|---|---|---|
| 0 | 83.929 | 83.920 | 83.928 | | | | 0.000 | 83.929 |
| 45 | 83.935 | 83.914 | 83.923 | 0.003 | -0.024 | 83.959 | -59.368 | 59.368 |
| 90 | 83.938 | 83.925 | 83.920 | -0.009 | -0.039 | 83.977 | -83.977 | 0.000 |
| 135 | 83.932 | 83.918 | 83.924 | -0.035 | -0.049 | 83.981 | -59.383 | -59.383 |
| 180 | 83.928 | 83.918 | 83.928 | -0.049 | -0.039 | 83.967 | 0.000 | -83.967 |
| 225 | 83.934 | 83.920 | 83.922 | -0.059 | -0.008 | 83.942 | 59.356 | -59.356 |
| 270 | 83.930 | 83.926 | 83.926 | -0.041 | 0.018 | 83.912 | 83.912 | 0.000 |
| 315 | 83.934 | 83.921 | 83.921 | -0.021 | 0.035 | 83.899 | 59.326 | 59.326 |

| X COORDINATE OF CENTER | Y COORDINATE OF CENTER |
|---|---|
| -0.034 | -0.021 |

| SAMPLE 7 | S0 | S45 | S90 | Δx | Δy | TRUE VALUE | X COORDINATE | Y COORDINATE |
|---|---|---|---|---|---|---|---|---|
| 0 | 83.942 | 83.912 | 83.924 | | | | 0.000 | 83.942 |
| 45 | 83.926 | 83.925 | 83.930 | 0.018 | -0.042 | 83.968 | -59.374 | 59.374 |
| 90 | 83.925 | 83.909 | 83.941 | -0.001 | -0.082 | 84.007 | -84.007 | 0.000 |
| 135 | 83.930 | 83.912 | 83.927 | -0.041 | -0.094 | 84.024 | -59.414 | -59.414 |
| 180 | 83.941 | 83.920 | 83.925 | -0.062 | -0.065 | 84.006 | 0.000 | -84.006 |
| 225 | 83.926 | 83.912 | 83.928 | -0.096 | -0.036 | 83.962 | 59.370 | -59.370 |
| 270 | 83.920 | 83.910 | 83.930 | -0.076 | -0.002 | 83.918 | 83.918 | 0.000 |
| 315 | 83.927 | 83.915 | 83.926 | -0.036 | 0.031 | 83.896 | 59.323 | 59.323 |

| X COORDINATE OF CENTER | Y COORDINATE OF CENTER |
|---|---|
| -0.046 | -0.038 |

| SAMPLE 8 | S0 | S45 | S90 | Δx | Δy | TRUE VALUE | X COORDINATE | Y COORDINATE |
|---|---|---|---|---|---|---|---|---|
| 0 | 83.913 | 83.899 | 83.922 | | | | 0.000 | 83.913 |
| 45 | 83.918 | 83.901 | 83.918 | 0.019 | -0.036 | 83.954 | -59.364 | 59.364 |
| 90 | 83.924 | 83.903 | 83.912 | -0.001 | -0.071 | 83.995 | -83.995 | 0.000 |
| 135 | 83.919 | 83.902 | 83.916 | -0.038 | -0.094 | 84.013 | -59.406 | -59.406 |
| 180 | 83.913 | 83.906 | 83.923 | -0.072 | -0.079 | 83.992 | 0.000 | -83.992 |
| 225 | 83.919 | 83.898 | 83.919 | -0.094 | -0.039 | 83.958 | 59.367 | -59.367 |
| 270 | 83.918 | 83.901 | 83.915 | -0.077 | -0.004 | 83.922 | 83.922 | 0.000 |
| 315 | 83.917 | 83.903 | 83.917 | -0.041 | 0.014 | 83.903 | 59.328 | 59.328 |

| X COORDINATE OF CENTER | Y COORDINATE OF CENTER |
|---|---|
| -0.037 | -0.040 |

| SAMPLE 9 | S0 | S45 | S90 | Δx | Δy | TRUE VALUE | X COORDINATE | Y COORDINATE |
|---|---|---|---|---|---|---|---|---|
| 0 | 83.945 | 83.920 | 83.915 | | | | 0.000 | 83.945 |
| 45 | 83.943 | 83.923 | 83.921 | 0.001 | -0.032 | 83.975 | -59.379 | 59.379 |
| 90 | 83.919 | 83.912 | 83.939 | -0.008 | -0.083 | 84.002 | -84.002 | 0.000 |
| 135 | 83.926 | 83.920 | 83.937 | -0.038 | -0.078 | 84.004 | -59.400 | -59.400 |
| 180 | 83.946 | 83.904 | 83.913 | -0.089 | -0.052 | 83.998 | 0.000 | -83.998 |
| 225 | 83.940 | 83.922 | 83.921 | -0.083 | -0.025 | 83.965 | 59.372 | -59.372 |
| 270 | 83.935 | 83.920 | 83.920 | -0.078 | 0.015 | 83.920 | 83.920 | 0.000 |
| 315 | 83.941 | 83.919 | 83.926 | -0.039 | 0.037 | 83.904 | 59.329 | 59.329 |

| X COORDINATE OF CENTER | Y COORDINATE OF CENTER |
|---|---|
| -0.040 | -0.029 |

| SAMPLE 10 | S0 | S45 | S90 | Δx | Δy | TRUE VALUE | X COORDINATE | Y COORDINATE |
|---|---|---|---|---|---|---|---|---|
| 0 | 83.922 | 83.901 | 83.910 | | | | 0.000 | 83.922 |
| 45 | 83.915 | 83.896 | 83.919 | 0.018 | -0.055 | 83.970 | -59.376 | 59.376 |
| 90 | 83.916 | 83.901 | 83.920 | -0.002 | -0.095 | 84.011 | -84.011 | 0.000 |
| 135 | 83.924 | 83.894 | 83.911 | -0.059 | -0.107 | 84.031 | -59.419 | -59.419 |
| 180 | 83.921 | 83.899 | 83.911 | -0.100 | -0.086 | 84.007 | 0.000 | -84.007 |
| 225 | 83.915 | 83.903 | 83.919 | -0.112 | -0.036 | 83.951 | 59.362 | -59.362 |
| 270 | 83.918 | 83.900 | 83.918 | -0.089 | 0.018 | 83.900 | 83.900 | 0.000 |
| 315 | 83.920 | 83.899 | 83.916 | -0.035 | 0.033 | 83.887 | 59.317 | 59.317 |

| X COORDINATE OF CENTER | Y COORDINATE OF CENTER |
|---|---|
| -0.057 | -0.043 |

# FIG. 11

| SAMPLE 1 | X | Y | DISTANCE |
|---|---|---|---|
| 0 | 0.058 | 83.977 | 83.977 |
| 45 | 59.328 | 59.428 | 83.974 |
| 90 | 83.955 | 0.041 | 83.955 |
| 135 | 59.368 | 59.385 | 83.970 |
| 180 | 0.058 | 83.972 | 83.972 |
| 225 | 59.425 | 59.325 | 83.969 |
| 270 | 83.967 | 0.041 | 83.967 |
| 315 | 59.376 | 59.359 | 83.958 |

| MAX | MIN |
|---|---|
| 83.977 | 83.955 |

| SAMPLE 2 | X | Y | DISTANCE |
|---|---|---|---|
| 0 | 0.031 | 83.963 | 83.963 |
| 45 | 59.345 | 59.412 | 83.974 |
| 90 | 83.985 | 0.037 | 83.985 |
| 135 | 59.384 | 59.378 | 83.978 |
| 180 | 0.031 | 83.969 | 83.969 |
| 225 | 59.411 | 59.344 | 83.973 |
| 270 | 83.980 | 0.037 | 83.980 |
| 315 | 59.384 | 59.390 | 83.986 |

| MAX | MIN |
|---|---|
| 83.986 | 83.963 |

| SAMPLE 3 | X | Y | DISTANCE |
|---|---|---|---|
| 0 | 0.013 | 83.962 | 83.962 |
| 45 | 59.342 | 59.393 | 83.959 |
| 90 | 83.949 | 0.038 | 83.949 |
| 135 | 59.365 | 59.340 | 83.937 |
| 180 | 0.013 | 83.955 | 83.955 |
| 225 | 59.395 | 59.344 | 83.961 |
| 270 | 83.953 | 0.038 | 83.953 |
| 315 | 59.335 | 59.360 | 83.930 |

| MAX | MIN |
|---|---|
| 83.962 | 83.930 |

| SAMPLE 4 | X | Y | DISTANCE |
|---|---|---|---|
| 0 | 0.039 | 83.952 | 83.952 |
| 45 | 59.331 | 59.407 | 83.961 |
| 90 | 83.962 | 0.037 | 83.962 |
| 135 | 59.366 | 59.367 | 83.957 |
| 180 | 0.039 | 83.954 | 83.954 |
| 225 | 59.407 | 59.330 | 83.960 |
| 270 | 83.961 | 0.037 | 83.961 |
| 315 | 59.369 | 59.367 | 83.959 |

| MAX | MIN |
|---|---|
| 83.962 | 83.952 |

| SAMPLE 5 | X | Y | DISTANCE |
|---|---|---|---|
| 0 | 0.097 | 83.994 | 83.994 |
| 45 | 59.308 | 59.467 | 83.987 |
| 90 | 83.973 | 0.063 | 83.973 |
| 135 | 59.352 | 59.386 | 83.960 |
| 180 | 0.097 | 83.988 | 83.988 |
| 225 | 59.469 | 59.310 | 83.989 |
| 270 | 83.974 | 0.063 | 83.974 |
| 315 | 59.382 | 59.348 | 83.955 |

| MAX | MIN |
|---|---|
| 83.994 | 83.955 |

# FIG. 12

| SAMPLE 6 | X | Y | DISTANCE |
|---|---|---|---|
| 0 | 0.034 | 83.950 | 83.950 |
| 45 | 59.334 | 59.389 | 83.950 |
| 90 | 83.944 | 0.021 | 83.944 |
| 135 | 59.350 | 59.362 | 83.942 |
| 180 | 0.034 | 83.946 | 83.946 |
| 225 | 59.390 | 59.335 | 83.951 |
| 270 | 83.945 | 0.021 | 83.945 |
| 315 | 59.360 | 59.347 | 83.938 |

| MAX | MIN |
|---|---|
| 83.951 | 83.938 |

| SAMPLE 7 | X | Y | DISTANCE |
|---|---|---|---|
| 0 | 0.046 | 83.980 | 83.980 |
| 45 | 59.328 | 59.412 | 83.962 |
| 90 | 83.962 | 0.038 | 83.962 |
| 135 | 59.368 | 59.376 | 83.965 |
| 180 | 0.046 | 83.968 | 83.968 |
| 225 | 59.416 | 59.333 | 83.968 |
| 270 | 83.964 | 0.038 | 83.964 |
| 315 | 59.369 | 59.361 | 83.955 |

| MAX | MIN |
|---|---|
| 83.980 | 83.955 |

| SAMPLE 8 | X | Y | DISTANCE |
|---|---|---|---|
| 0 | 0.037 | 83.953 | 83.953 |
| 45 | 59.327 | 59.404 | 83.956 |
| 90 | 83.958 | 0.040 | 83.958 |
| 135 | 59.369 | 59.366 | 83.958 |
| 180 | 0.037 | 83.952 | 83.952 |
| 225 | 59.404 | 59.327 | 83.956 |
| 270 | 83.959 | 0.040 | 83.959 |
| 315 | 59.365 | 59.368 | 83.957 |

| MAX | MIN |
|---|---|
| 83.959 | 83.952 |

| SAMPLE 9 | X | Y | DISTANCE |
|---|---|---|---|
| 0 | 0.040 | 83.974 | 83.974 |
| 45 | 59.339 | 59.409 | 83.968 |
| 90 | 83.962 | 0.029 | 83.962 |
| 135 | 59.360 | 59.371 | 83.955 |
| 180 | 0.040 | 83.969 | 83.969 |
| 225 | 59.412 | 59.343 | 83.973 |
| 270 | 83.960 | 0.029 | 83.960 |
| 315 | 59.369 | 59.358 | 83.953 |

| MAX | MIN |
|---|---|
| 83.974 | 83.953 |

| SAMPLE 10 | X | Y | DISTANCE |
|---|---|---|---|
| 0 | 0.057 | 83.965 | 83.965 |
| 45 | 59.319 | 59.419 | 83.961 |
| 90 | 83.955 | 0.043 | 83.955 |
| 135 | 59.362 | 59.375 | 83.960 |
| 180 | 0.057 | 83.964 | 83.964 |
| 225 | 59.419 | 59.319 | 83.960 |
| 270 | 83.957 | 0.043 | 83.957 |
| 315 | 59.374 | 59.361 | 83.958 |

| MAX | MIN |
|---|---|
| 83.965 | 83.955 |

# FIG. 13

| SAMPLE No. | ROUNDNESS MEASURING INSTRUMENT RA-H5000AH | PRESENT MEASURING METHOD | DIFFERENCE |
|---|---|---|---|
| 1 | 21.9 | 22.2 | 0.3 |
| 2 | 22.1 | 23.3 | 1.2 |
| 3 | 31.1 | 32.3 | 1.2 |
| 4 | 8.8 | 9.5 | 0.7 |
| 5 | 38.0 | 38.3 | 0.3 |
| 6 | 11.3 | 13.1 | 1.8 |
| 7 | 23.6 | 25.0 | 1.4 |
| 8 | 6.8 | 6.9 | 0.1 |
| 9 | 19.4 | 21.6 | 2.2 |
| 10 | 9.3 | 10.8 | 1.5 |

UNIT : $\mu$ m

# FIG. 14

COMPARISON OF ROUNDNESS MEASURING INSTRUMENT AND PRESENT MEASURING METHOD

# FIG. 15

| SAMPLE No. | BY ROUNDNESS MEASURING INSTRUMENT RA-H5000AH | | BY PRESENT MEASURING METHOD | DIFFERENCE |
|---|---|---|---|---|
| | CENTERING AND LEVELING | MEASURED VALUE | | |
| 1 | 55 | 23 | 35 | 43 |
| 2 | 54 | 23 | 35 | 42 |
| 3 | 55 | 23 | 35 | 43 |
| 4 | 54 | 23 | 35 | 42 |
| 5 | 54 | 23 | 35 | 42 |
| 6 | 54 | 23 | 35 | 42 |
| 7 | 55 | 23 | 35 | 43 |
| 8 | 54 | 23 | 35 | 42 |
| 9 | 54 | 23 | 35 | 42 |
| 10 | 54 | 23 | 35 | 42 |
| AVERAGE | 54.3 | 23.0 | 35.0 | 42.3 |
| TOTAL | 543 | 230 | 350 | 423 |

UNIT : SECONDS

## FIG. 16

| | 0° | 15° | 30° | 45° | 60° | 75° | 90° | 105° | 120° | 135° | 150° | 165° | 180° | 195° | 210° | 225° | 240° | 255° | 270° | 285° | 300° | 315° | 330° | 345° |
|---|---|---|---|---|---|---|---|---|---|---|---|---|---|---|---|---|---|---|---|---|---|---|---|---|
| S0 | 463.0 | 462.8 | 462.0 | 463.5 | 465.0 | 466.4 | 467.8 | 468.2 | 468.4 | 467.4 | 466.5 | 466.7 | 465.3 | 465.5 | 464.7 | 464.3 | 464.3 | 465.6 | 467.3 | 469.2 | 470.6 | 469.2 | 467.0 | 464.4 |
| S15 | 462.2 | 462.9 | 463.9 | 466.5 | 468.1 | 469.7 | 470.2 | 469.4 | 468.3 | 466.1 | 464.7 | 464.4 | 463.7 | 465.3 | 467.0 | 466.1 | 467.6 | 468.9 | 469.5 | 470.4 | 470.3 | 467.4 | 464.6 | 462.3 |
| S60 | 461.8 | 464.4 | 467.5 | 470.4 | 472.0 | 473.2 | 471.9 | 468.5 | 464.0 | 459.7 | 458.4 | 459.1 | 461.2 | 465.2 | 469.2 | 471.2 | 472.5 | 471.8 | 469.5 | 466.9 | 462.9 | 460.2 | 458.7 | 459.7 |
| S75 | 463.4 | 465.7 | 468.8 | 471.3 | 472.8 | 473.8 | 472.0 | 468.3 | 463.4 | 459.5 | 459.5 | 459.2 | 462.6 | 466.7 | 470.6 | 472.4 | 473.4 | 471.6 | 468.6 | 465.7 | 462.1 | 460.2 | 460.0 | 461.6 |

## FIG. 17

| | 0° | 15° | 30° | 45° | 60° | 75° | 90° | 105° | 120° | 135° | 150° | 165° | 180° | 195° | 210° | 225° | 240° | 255° | 270° | 285° | 300° | 315° | 330° | 345° |
|---|---|---|---|---|---|---|---|---|---|---|---|---|---|---|---|---|---|---|---|---|---|---|---|---|
| S0 | 0.0 | -0.2 | -1.0 | 0.5 | 2.0 | 3.4 | 4.8 | 5.2 | 5.4 | 4.4 | 3.5 | 3.7 | 2.3 | 2.5 | 1.7 | 1.3 | 1.3 | 2.6 | 4.3 | 6.2 | 7.6 | 6.2 | 4.0 | 1.4 |
| S15 | -0.8 | -0.1 | 0.9 | 3.5 | 5.1 | 6.7 | 7.2 | 6.4 | 5.3 | 3.1 | 1.7 | 1.4 | 0.7 | 2.3 | 4.0 | 3.1 | 4.6 | 5.9 | 6.5 | 7.4 | 7.3 | 4.4 | 1.6 | -0.7 |
| S60 | -1.2 | 1.4 | 4.5 | 7.4 | 9.0 | 10.2 | 8.9 | 5.5 | 1.0 | -3.3 | -4.6 | -3.9 | -1.8 | 2.2 | 6.2 | 8.2 | 9.5 | 8.8 | 6.5 | 3.9 | -0.1 | -2.8 | -4.3 | -3.3 |
| S75 | 0.4 | 2.7 | 5.8 | 8.3 | 9.8 | 10.8 | 9.0 | 5.3 | 0.4 | -3.5 | -3.5 | -3.8 | -0.4 | 3.7 | 7.6 | 9.4 | 10.4 | 8.6 | 5.6 | 2.7 | -0.9 | -2.8 | -3.0 | -1.4 |

| | 0° | 15° | 30° | 45° | 60° | 75° | 90° | 105° | 120° | 135° | 150° | 165° | 180° | 195° | 210° | 225° | 240° | 255° | 270° | 285° | 300° | 315° | 330° | 345° |
|---|---|---|---|---|---|---|---|---|---|---|---|---|---|---|---|---|---|---|---|---|---|---|---|---|
| S0 | 50.0 | 50.2 | 51.0 | 49.5 | 48.0 | 46.6 | 45.2 | 44.8 | 44.6 | 45.6 | 46.5 | 46.3 | 47.7 | 47.5 | 48.3 | 48.7 | 48.7 | 47.4 | 45.7 | 43.8 | 42.4 | 43.8 | 46.0 | 48.6 |
| S15 | 50.8 | 50.1 | 49.1 | 46.5 | 44.9 | 43.3 | 42.8 | 43.6 | 44.7 | 46.9 | 48.3 | 48.6 | 49.3 | 47.7 | 46.0 | 46.9 | 45.4 | 44.1 | 43.5 | 42.6 | 42.7 | 45.6 | 48.4 | 50.7 |
| S60 | 51.2 | 48.6 | 45.5 | 42.6 | 41.0 | 39.8 | 41.1 | 44.5 | 49.0 | 53.3 | 54.6 | 53.9 | 51.8 | 47.8 | 43.8 | 41.8 | 40.5 | 41.2 | 43.5 | 46.1 | 50.1 | 52.8 | 54.3 | 53.3 |
| S75 | 49.6 | 47.3 | 44.2 | 41.7 | 40.2 | 39.2 | 41.0 | 44.7 | 49.6 | 53.5 | 53.5 | 53.8 | 50.4 | 46.3 | 42.4 | 40.6 | 39.6 | 41.4 | 44.4 | 47.3 | 50.9 | 52.8 | 53.0 | 51.4 |

EP 1 992 909 B1

# FIG. 18

|         | S0   | S15  | S60  | S75  | Δx    | Δy    | TRUE VALUE |
|---------|------|------|------|------|-------|-------|------------|
| 0°      | 50.0 | 50.8 | 51.2 | 49.6 |       |       |            |
| 15°     | 50.2 | 50.1 | 48.6 | 47.3 | -4.4  | 1.3   | 48.9       |
| 30°     | 51.0 | 49.1 | 45.5 | 44.2 | -5.8  | 1.7   | 49.3       |
| 45°     | 49.5 | 46.5 | 42.6 | 41.7 | -4.5  | -1.6  | 51.1       |
| 60°     | 48.0 | 44.9 | 41.0 | 40.2 | -10.0 | -3.8  | 51.8       |
| 75°     | 46.6 | 43.3 | 39.8 | 39.2 | -9.5  | -6.3  | 52.9       |
| 90°     | 45.2 | 42.8 | 41.1 | 41.0 | -5.8  | -8.8  | 54.0       |
| 105°    | 44.8 | 43.6 | 44.5 | 44.7 | -2.0  | -10.3 | 55.1       |
| 120°    | 44.6 | 44.7 | 49.0 | 49.6 | 1.4   | -11.1 | 55.7       |
| 135°    | 45.6 | 46.9 | 53.3 | 53.5 | 4.5   | -10.3 | 55.9       |
| 150°    | 46.5 | 48.3 | 54.6 | 53.5 | 3.0   | -8.7  | 55.2       |
| 165°    | 46.3 | 48.6 | 53.9 | 53.8 | 1.7   | -7.3  | 53.6       |
| 180°    | 47.7 | 49.3 | 51.8 | 50.4 | -3.9  | -3.4  | 51.1       |
| 195°    | 47.5 | 47.7 | 47.8 | 46.3 | -9.5  | -1.0  | 48.5       |
| 210°    | 48.3 | 46.0 | 43.8 | 42.4 | -14.4 | 1.3   | 47.0       |
| 225°    | 48.7 | 46.9 | 41.8 | 40.6 | -16.3 | 4.2   | 44.5       |
| 240°    | 48.7 | 45.4 | 40.5 | 39.6 | -15.9 | 5.2   | 43.5       |
| 255°    | 47.4 | 44.1 | 41.2 | 41.4 | -11.0 | 3.6   | 43.8       |
| 270°    | 45.7 | 43.5 | 43.5 | 44.4 | -4.5  | 0.9   | 44.8       |
| 285°    | 43.8 | 42.6 | 46.1 | 47.3 | 1.0   | -2.5  | 46.3       |
| 300°    | 42.4 | 42.7 | 50.1 | 50.9 | 8.3   | -6.0  | 48.4       |
| 315°    | 43.8 | 45.6 | 52.8 | 52.8 | 11.2  | -5.9  | 49.7       |
| 330°    | 46.0 | 48.4 | 54.3 | 53.0 | 10.7  | -4.2  | 50.2       |
| 345°    | 48.6 | 50.7 | 53.3 | 51.4 | 7.2   | -1.4  | 50.0       |

# FIG. 19

| MEASUREMENT ANGLE (°) | MEASURED VALUE ($\mu$m) | X COOR-DINATE | Y COOR-DINATE |
|---|---|---|---|
| 0 | 50.0 | 0.0 | 50.0 |
| 15 | 48.9 | -12.7 | 47.3 |
| 30 | 49.3 | -24.6 | 42.7 |
| 45 | 51.1 | -36.2 | 36.2 |
| 60 | 51.8 | -44.9 | 25.9 |
| 75 | 52.9 | -51.1 | 13.7 |
| 90 | 54.0 | -54.0 | 0.0 |
| 105 | 55.1 | -53.2 | -14.3 |
| 120 | 55.7 | -48.3 | -27.9 |
| 135 | 55.9 | -39.6 | -39.6 |
| 150 | 55.2 | -27.6 | -47.8 |
| 165 | 53.6 | -13.9 | -51.8 |
| 180 | 51.1 | 0.0 | -51.1 |
| 195 | 48.5 | 12.5 | -46.8 |
| 210 | 47.0 | 23.5 | -40.7 |
| 225 | 44.5 | 31.4 | -31.4 |
| 240 | 43.5 | 37.6 | -21.7 |
| 255 | 43.8 | 42.3 | -11.3 |
| 270 | 44.8 | 44.8 | 0.0 |
| 285 | 46.3 | 44.8 | 12.0 |
| 300 | 48.4 | 41.9 | 24.2 |
| 315 | 49.7 | 35.1 | 35.1 |
| 330 | 50.2 | 25.1 | 43.5 |
| 345 | 50.0 | 12.9 | 48.3 |

| X | Y | DISTANCE |
|---|---|---|
| 4.5 | 50.5 | 50.7 |
| 8.2 | 47.7 | 48.4 |
| 20.1 | 43.1 | 47.6 |
| 31.7 | 36.6 | 48.4 |
| 40.4 | 26.4 | 48.2 |
| 46.6 | 14.2 | 48.7 |
| 49.6 | 0.5 | 49.6 |
| 48.7 | 13.8 | 50.6 |
| 43.8 | 27.4 | 51.6 |
| 35.1 | 39.1 | 52.5 |
| 23.1 | 47.4 | 52.7 |
| 9.4 | 51.3 | 52.2 |
| 4.5 | 50.6 | 50.8 |
| 17.0 | 46.4 | 49.4 |
| 28.0 | 40.3 | 49.0 |
| 35.9 | 31.0 | 47.4 |
| 42.1 | 21.3 | 47.2 |
| 46.8 | 10.9 | 48.0 |
| 49.3 | 0.5 | 49.3 |
| 49.3 | 12.5 | 50.8 |
| 46.4 | 24.7 | 52.5 |
| 39.6 | 35.6 | 53.3 |
| 29.6 | 43.9 | 53.0 |
| 17.4 | 48.8 | 51.8 |

| COORDINATES OF CENTER | X | -4.5 |
|---|---|---|
| | Y | -0.5 |

| ROUNDNESS | 6.1 |
|---|---|

EP 1 992 909 B1

## FIG. 20

| ANGLE(°) | 30mm | 35mm | 40mm | 60mm | 80mm | 90mm | 120mm | 140mm | 150mm | 180mm | 200mm | 210mm | 240mm | 260mm | 270mm | 300mm | 310mm | 320mm | 330mm | 350mm |
|---|---|---|---|---|---|---|---|---|---|---|---|---|---|---|---|---|---|---|---|---|
| 0° | 50.7 | 51.3 | 50.6 | 51.1 | 52.1 | 51.5 | 51.4 | 50.7 | 50.0 | 50.8 | 50.6 | 51.0 | 51.7 | 52.7 | 52.9 | 53.1 | 53.0 | 53.6 | 53.0 | 52.1 |
| 15° | 48.4 | 49.4 | 48.7 | 49.7 | 50.3 | 50.4 | 50.8 | 50.5 | 49.9 | 50.8 | 50.5 | 50.9 | 51.9 | 52.7 | 52.7 | 52.3 | 52.1 | 52.4 | 51.7 | 50.1 |
| 30° | 47.8 | 48.8 | 47.7 | 48.8 | 50.3 | 49.8 | 50.8 | 50.3 | 49.9 | 50.7 | 50.6 | 51.1 | 52.1 | 52.8 | 52.8 | 51.8 | 51.4 | 51.4 | 50.3 | 48.4 |
| 45° | 48.4 | 49.6 | 48.2 | 48.8 | 50.7 | 50.0 | 50.9 | 50.6 | 50.2 | 50.9 | 51.0 | 51.6 | 52.6 | 53.2 | 53.5 | 52.0 | 51.2 | 51.2 | 49.8 | 47.5 |
| 60° | 48.2 | 49.2 | 47.7 | 48.2 | 49.7 | 49.3 | 50.1 | 49.8 | 49.3 | 49.9 | 50.1 | 50.6 | 51.6 | 52.2 | 52.3 | 50.9 | 50.0 | 49.9 | 48.4 | 46.1 |
| 75° | 48.7 | 49.6 | 47.9 | 49.1 | 49.8 | 49.1 | 49.6 | 49.5 | 48.9 | 49.4 | 49.6 | 50.2 | 51.4 | 52.0 | 52.1 | 51.0 | 50.0 | 50.3 | 48.6 | 46.4 |
| 90° | 49.8 | 50.3 | 48.7 | 49.5 | 49.5 | 49.1 | 49.3 | 49.0 | 48.4 | 48.7 | 49.0 | 49.6 | 50.9 | 51.6 | 51.7 | 51.1 | 50.4 | 50.6 | 49.2 | 47.7 |
| 105° | 50.6 | 51.1 | 49.0 | 49.9 | 49.4 | 49.1 | 48.9 | 48.5 | 47.9 | 48.1 | 48.4 | 49.0 | 50.1 | 51.0 | 51.1 | 51.3 | 50.8 | 51.0 | 50.2 | 49.5 |
| 120° | 51.6 | 51.7 | 50.1 | 50.5 | 48.2 | 48.9 | 48.4 | 48.0 | 47.3 | 47.3 | 47.6 | 48.1 | 49.2 | 50.1 | 50.2 | 51.1 | 50.9 | 51.3 | 51.0 | 51.4 |
| 135° | 52.5 | 52.1 | 50.7 | 50.9 | 49.1 | 48.9 | 48.1 | 47.8 | 47.1 | 47.0 | 47.4 | 47.7 | 48.8 | 49.8 | 49.8 | 51.2 | 51.1 | 51.8 | 51.9 | 53.1 |
| 150° | 52.7 | 51.8 | 51.0 | 50.2 | 48.9 | 48.8 | 47.9 | 47.7 | 46.9 | 46.8 | 47.2 | 47.3 | 48.3 | 49.1 | 49.0 | 50.9 | 51.0 | 51.7 | 52.0 | 54.0 |
| 165° | 52.2 | 51.2 | 50.6 | 49.3 | 48.7 | 48.8 | 48.0 | 47.8 | 46.9 | 46.6 | 47.2 | 47.1 | 48.1 | 48.7 | 48.4 | 50.4 | 50.5 | 51.0 | 51.0 | 53.7 |
| 180° | 50.8 | 49.7 | 49.9 | 49.1 | 48.1 | 48.1 | 47.6 | 47.7 | 46.9 | 46.6 | 47.1 | 46.8 | 47.6 | 48.1 | 47.7 | 49.4 | 49.9 | 50.0 | 50.4 | 52.3 |
| 195° | 49.4 | 48.0 | 48.8 | 48.0 | 47.4 | 47.6 | 47.3 | 47.5 | 46.0 | 46.5 | 47.1 | 46.6 | 47.1 | 47.3 | 46.7 | 48.3 | 48.8 | 48.5 | 48.9 | 50.3 |
| 210° | 49.0 | 47.4 | 48.9 | 47.9 | 48.0 | 48.1 | 48.1 | 48.5 | 47.9 | 47.5 | 46.0 | 47.1 | 47.3 | 47.2 | 46.5 | 47.7 | 47.8 | 47.5 | 47.4 | 48.5 |
| 225° | 47.4 | 45.9 | 48.1 | 47.1 | 47.3 | 47.6 | 47.7 | 48.2 | 47.7 | 47.3 | 47.8 | 48.8 | 46.8 | 46.8 | 46.0 | 46.7 | 46.9 | 46.1 | 45.2 | 47.0 |
| 240° | 47.2 | 45.8 | 48.8 | 47.5 | 47.6 | 47.8 | 47.9 | 48.3 | 48.0 | 47.5 | 47.8 | 48.7 | 46.7 | 46.3 | 45.7 | 46.2 | 46.6 | 45.5 | 45.7 | 46.1 |
| 255° | 48.0 | 46.7 | 49.7 | 48.3 | 48.3 | 48.4 | 48.3 | 48.5 | 48.4 | 47.8 | 47.9 | 48.8 | 46.8 | 46.8 | 46.2 | 46.6 | 47.0 | 46.0 | 46.1 | 46.4 |
| 270° | 49.3 | 48.2 | 51.2 | 49.4 | 49.3 | 49.3 | 48.9 | 48.9 | 48.9 | 48.3 | 48.1 | 47.3 | 47.4 | 47.2 | 47.2 | 47.6 | 48.1 | 47.4 | 47.4 | 47.8 |
| 285° | 50.8 | 49.9 | 52.6 | 50.5 | 50.0 | 49.9 | 49.2 | 48.7 | 48.8 | 48.2 | 47.9 | 47.2 | 47.6 | 47.8 | 47.9 | 48.4 | 49.2 | 48.5 | 48.3 | 49.3 |
| 300° | 52.5 | 51.9 | 54.1 | 51.8 | 51.1 | 50.9 | 49.9 | 49.1 | 49.3 | 48.6 | 48.2 | 47.8 | 48.3 | 48.8 | 49.2 | 49.9 | 50.9 | 50.5 | 50.9 | 51.4 |
| 315° | 53.3 | 53.1 | 54.5 | 52.5 | 51.5 | 51.5 | 50.3 | 49.3 | 49.0 | 49.0 | 48.6 | 48.3 | 49.0 | 49.8 | 50.3 | 51.2 | 51.9 | 52.1 | 52.6 | 53.2 |
| 330° | 53.0 | 53.3 | 54.0 | 52.7 | 52.1 | 51.7 | 50.7 | 49.5 | 49.7 | 49.4 | 48.9 | 48.9 | 49.5 | 50.4 | 51.1 | 52.1 | 52.7 | 53.1 | 53.7 | 54.1 |
| 345° | 51.8 | 52.5 | 52.4 | 52.1 | 51.8 | 51.5 | 50.8 | 49.4 | 49.9 | 49.8 | 49.1 | 49.5 | 50.0 | 51.0 | 51.8 | 52.5 | 52.8 | 53.4 | 53.9 | 53.9 |

| MAX | MIN |
|---|---|
| 54.40 | 45.5 |

EP 1 992 909 B1

# FIG. 21

| SAMPLE No. | 1 | 2 | 3 | 4 | 5 | 6 | 7 | 8 | 9 | 10 |
|---|---|---|---|---|---|---|---|---|---|---|
| ROUNDNESS [$\mu$m] | 11.2 | 10.8 | 12.0 | 11.5 | 10.8 | 12.4 | 10.2 | 11.1 | 12.8 | 10.9 |

# FIG. 22

| SAMPLE No. | 1 | 2 | 3 | 4 | 5 | 6 | 7 | 8 | 9 | 10 |
|---|---|---|---|---|---|---|---|---|---|---|
| ROUNDNESS [$\mu$m] | 18.1 | 17.3 | 19.1 | 17.2 | 17.5 | 18.6 | 19.0 | 18.5 | 17.6 | 17.1 |

40

# FIG. 23

**EP 1 992 909 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H06201375 B
- JP H08005341 B
- JP H06147879 B
- US 2004226336 A1
- JP 60073413 A